# EUROPEAN PATENT SPECIFICATION

(11) **EP 3 288 430 B1**
(45) Date of publication and mention of the grant of the patent: **21.08.2019**
(21) Application number: 16720493.2
(22) Date of filing: 26.04.2016
(51) Int. Cl.: A47J 31/44, A47J 43/28, A47G 21/00, B65D 85/808

(54) **AN INGREDIENT DISPENSER**
ZUTATENSPENDER
DISTRIBUTEUR D'INGRÉDIENT

(30) Priority: 27.04.2015 GB 201507140
(43) Date of publication of application: 07.03.2018
(73) Proprietor: Rayne, Damian, London W11 1LR (GB)
(72) Inventor: Rayne, Damian, London W11 1LR (GB)
(74) Representative: Ridley, Daniel
(86) International application number: PCT/GB2016/051175
(87) International publication number: WO 2016/174416

(56) References cited:
- US-A- 5 125 534
- US-A1- 2012 213 891

## Description

The present invention relates to an apparatus for dispensing ingredient into a liquid. In particular, but not exclusively, the invention may be embodiment as an ingredient dispenser for flavouring a drink, such as coffee or tea etc., or foodstuffs, such as soup etc.

When preparing drinks, particularly in coffeehouses, cafes and restaurants, it is usual for sachets of sugar and other ingredients to be provided so that the consumer may flavour their beverage according to their particular taste. Such sachets are generally manufactured from paper. Wanting to add ingredient to their beverage, the user tears open the sachets and pours their contents into their beverage and, in order for the user to stir the beverage to ensure that the ingredient is properly mixed and fully dissolved into the beverage, stirrer sticks, often manufactured from plastic or wood, are additionally provided and are used by the consumer for such purpose. The sachets of ingredients can be very messy as they have a tendency to spill their contents when they are torn open and additionally they require the use of separate stirrer sticks. Additionally, plastic stirrer sticks are not particularly environmentally friendly as they are non-biodegradable. Coffeehouses wishing to present a more environmentally responsible image may therefore be less inclined to provide such plastic stirrer sticks.

A known beverage flavouring and dispensing apparatus, as described in US 5,125,534, comprises an upper body chamber comprising a central spine member and a lower housing comprising a dissolvable film. However, apparatuses such as these are manufactured from non-biodegradable plastic and, as such, the remaining plastic portion of the apparatus must be thrown away after use, thereby presenting environmental challenges.

A known elutable substance delivery device, as described in US 2007/0059409, comprises an elongate body wherein a composition including an elutable substantive dissolved or dispersed in a carrier is affixed. Similarly, such devices leave waste after their use as the elongate body must be dispensed of. Additionally, the quantity of ingredient capable of being dispensed by such devices is limited by the surface area of the body and the quantity of ingredient dispensed by such devices is therefore typically small.

US 5 125 534 discloses a beverage flavouring and dispensing apparatus.

There is therefore a need for an improved ingredient dispenser which is easier to use, more environmentally friendly, more visually appealing and which retains a home-made appearance, while being simple and cheap to manufacture.

The present invention aims to alleviate, at least to a certain extent, the problems and/or address at least to a certain extent the difficulties associated with the prior art.

According to a first aspect of the present invention, there is provided, an ingredient dispenser for dispensing ingredient into a liquid, the ingredient dispenser comprising an elongate main body comprising an ingredient dispensing portion at a distal end of the elongate main body, wherein the ingredient dispensing portion is configured to release ingredient from the ingredient dispenser, and a stirrer portion at a proximal end of the elongate main body, wherein the stirrer portion is configured to enable a liquid to be stirred by the stirrer portion, and wherein the main body is configured to at least partially disintegrate upon contact with a liquid including water. Both the stirrer portion and the ingredient dispensing portion are configured to disintegrate in a liquid including water. An ingredient dispenser comprising a disintegratable main body configured to disintegrate upon contact with a liquid including water enables substantially the whole of the ingredient dispenser to substantially or partially disintegrate such that a portion or the entirety thereof may disintegrate within the liquid to be flavoured to thereby enable the ingredient of the ingredient dispenser, which may be contained within the ingredient dispenser, to escape the ingredient dispenser and to mix with the liquid to be flavoured, thereby flavouring the liquid.

The ingredient dispenser may dispense any suitable ingredient, for example it may dispense one or more, or any combination of, flavourants, flavourings, flavour enhancers, stabilisers, emulsifiers, thickeners, aromatic compounds, tastants, sweeteners, pharmaceuticals, for example paracetamol, vitamins, minerals, colourings, colorants, dyes, antioxidants, carbohydrates, fats, proteins, extracts such as yeast extract, meat extract, plant extract, fruit extract or vegetable extract, or other natural extracts, herbs or herb extracts, spices or spice extracts, botanicals, or essential oils. Any further suitable ingredient may be used, for example, sugar, salt, honey, spices, stock, condiments, etc.

The ingredient may also comprise a foodstuff, for example seaweed. An ingredient dispensing portion is provided to enable ingredient to be dispensed from the main body of the ingredient dispenser and a stirrer portion enables a portion of the main body to be used as a stirrer to stir the liquid once it has been flavoured. A water-disintegratable main body is particularly advantageous as it may disintegrate or dissolve in a wide array of drinks, e.g. tea and coffee, as well as other liquid, water-based foodstuffs, such as soups etc., and is therefore particularly adapted for flavouring such drinks and foodstuffs.

An elongate main body enables a user to easily maintain a hold on the ingredient dispenser while it is being dipped into the liquid to be flavoured without their fingers being exposed
to the liquid. Such a feature is particularly advantageous when the liquid to be flavoured may be hot or when there is some other reason why the user may not wish their fingers to come into contact with the liquid. Furthermore, an elongate main body provides for an easy means of enabling the user to stir the liquid to facilitate or accelerate mixing and thereby flavouring of the liquid. Only a portion of the main body may be configured to dispense ingredient, although examples wherein the entire main body comprising ingredient are also envisaged. The ingredient dispensing portion being located at or towards one end of the elongate portion provides that the ingredient is dispersed from one end of the ingredient dispenser, thereby enabling the user to hold the opposite end while the ingredient dispensing portion is submerged (or otherwise exposed to the liquid to be flavoured) in use. The provision of a stirrer portion enables the user to stir the liquid while at least a portion of the material of the main body is dissolving or disintegrating in order to control the rate at which the material disintegrates or dissolves or to ensure the ingredient is thoroughly mixed or dissolved within the liquid.

Optionally, the ingredient dispenser comprises ingredient and wherein the main body is configured to enable the ingredient to be released from the ingredient dispenser upon disintegration of the main body. The ingredient is therefore released from the main body, or a portion thereof, by disintegration of main body. The material may itself disintegrate or seals (such as a steam-pressed seal) holding the main body together may disintegrate, allowing the material of the main body to unfold or collapse, therefore releasing ingredient. Alternatively or additionally, an ingredient containing portion may disintegrate to thereby release ingredient into the liquid to be flavoured.

Optionally, substantially the entirety of the main body is configured to disintegrate upon contact with a liquid including water. An ingredient dispenser wherein substantially the entirety of the main body is disintegratable upon contact with a liquid including water enables substantially the entire ingredient dispenser to disintegrate when flavouring the liquid, thereby reducing waste. Such an ingredient dispenser is therefore more convenient and may be more environmentally friendly.

According to a second aspect of the present invention, there is provided an ingredient dispenser for dispensing ingredient into a liquid, the ingredient dispenser comprising an elongate main body comprising an ingredient dispensing portion at a distal end of the elongate main body, wherein the ingredient dispensing portion is configured to release ingredient from the ingredient dispenser, and a stirrer portion at a proximal end of the elongate main body, wherein the stirrer portion is configured to enable a liquid to be stirred by the stirrer portion, and wherein the main body is configured to at least partially dissolve upon contact with a liquid including water. Both the stirrer portion and the ingredient dispensing portion are configured to disintegrate in a liquid including water. A water-dissolvable, or water-soluble, main body provides an ingredient dispenser which is substantially able to dissolve within the liquid, thereby reducing the quantity of waste or remnants of the ingredient dispenser at the bottom of the liquid container. An ingredient dispensing portion is provided to enable ingredient is be dispensed from the main body of the ingredient dispenser and a stirrer portion enables a portion of the main body to be used as a stirrer to stir the liquid once it has been flavoured (or at least once flavourant or ingredient has been added to the liquid). A water-soluble main body is particularly advantageous as it may disintegrate or dissolve in a wide array of drinks, e.g. tea and coffee, as well as other liquid, water-based foodstuffs, such as soups etc., and is therefore particularly adapted for flavouring such drinks and foodstuffs. An elongate main body enables a user to easily maintain a hold on the ingredient dispenser while it is being dipped into the liquid to be flavoured without their fingers being exposed to the liquid. Such a feature is particularly advantageous when the liquid to be flavoured may be hot or when there is some other reason why the user may not wish their fingers to come into contact with the liquid. Furthermore, an elongate main body provides for an easy means of enabling the user to stir the liquid to facilitate or accelerate mixing and thereby flavouring of the liquid. Thus, only a portion of the main body may be configured to dispense ingredient, although examples wherein the entire main body comprises ingredient are also envisaged. The ingredient dispensing portion being located at or towards one end of the elongate portion provides that the ingredient is dispersed from one end of the ingredient dispenser, thereby enabling the user to hold the opposite end while the ingredient dispensing portion is submerged (or otherwise exposed to the liquid to be flavoured) in use. The provision of a stirrer portion enables the user to stir the liquid while at least a portion of the material of the main body is dissolving or disintegrating in order to control the rate at which the material disintegrates or dissolves or to ensure the ingredient is thoroughly mixed or dissolved within the liquid.

Optionally, the ingredient dispenser comprises ingredient and wherein the main body is configured to enable the ingredient to be released from the ingredient dispenser upon contact with a liquid including water. The ingredient is therefore released from the main body, or a portion thereof, by way of the main body dissolving in the liquid including water. The material may itself dissolve, allowing the material to unfold or collapse, therefore releasing ingredient into the liquid. Alternatively or additionally, an ingredient containing portion may disintegrate to thereby release ingredient into the liquid to be flavoured.

Optionally, substantially the entirety of the main body is configured to dissolve in a liquid including water. Ingredient dispensers wherein the entirety of the main body is configured to dissolve in a liquid are particular advantageous as they may be dissolved in their entirety in the liquid which is to be flavoured.

Optionally, the main body comprises an external wall comprising ingredient. An external wall comprising ingredient provides a convenient means of delivering ingredient to the liquid. This is because, as the main body is configured to disintegrate or dissolve in the liquid, the disintegrated or dissolved portions will remain in the liquid and deliver ingredient to the liquid. The material of the external wall may be manufactured from a foodstuff, for example seaweed (seaweed being an ingredient of many dishes).

Optionally, the ingredient is dispersed on or in at least a portion of the external wall. Ingredient may be dispersed or adhered to the external wall or surface, for example sugar solution may be applied to the external wall and allowed to dry, thereby forming sugar crystals and providing a sugar coating or layer to the external wall or surface. Furthermore, ingredient applied to the external wall of the main body of the ingredient dispenser is readily absorbed by the liquid as the ingredient may be directly exposed to the liquid in use.

Optionally, the ingredient dispensing portion comprises an internal chamber configured to contain, or containing, a quantity of ingredient. An internal chamber or reservoir provides a convenient means of storing a relatively large, or at least increased, quantity of ingredient and provides that the ingredient is sealed and therefore not exposed to external air or bacteria, thereby extending the usable life of the ingredient dispenser.

Optionally, the internal chamber comprises a receptacle configured to contain, or containing, a quantity of ingredient. Such a receptacle may be a capsule or sachet or other such suitable container for containing a quantity of ingredient. In some examples, the receptacle of the ingredient dispenser contains ingredient. The receptacle may have substantially rigid walls or it, or at least a portion of the receptacle, may be flexible such that it may generally or substantially conform with and adapt to the shape of the internal chamber. The capsule may contain liquid ingredient, e.g. honey, or it may contain solid ingredient, for example powered ingredient or granules of ingredient. Receptacles may provide an easier and faster means of providing the ingredient dispenser with flavourant or ingredient and may be particularly advantageous when manufacturing or assembling an ingredient dispenser according to the present invention.

Both the stirrer portion and the ingredient dispensing portion are configured to dissolve in a liquid including water. Such a feature provides for reduced waste after the ingredient dispenser has been used.

Optionally, the ingredient dispensing portion is configured, upon exposure of a portion of the main body to a liquid, to enable at least a portion of the contents of the internal chamber to be released from the ingredient dispenser. Although in some examples, the internal chamber may comprise ingredient, in other examples it does not contain ingredient and it may be used as an ingredient dispensing channel and/or as a stirrer.

Optionally, the internal chamber contains ingredient and the internal chamber is configured to enable the ingredient to be released from the internal chamber upon the exposure of a portion of the main body to a liquid including water. In this way, when liquid contacts the portion of the main body, the liquid may dissolve or disintegrate that portion of the main body and enable the ingredient within the internal chamber to escape the ingredient dispenser, through the aperture formed in the dissolved or disintegrated portion of the main body, and mix with the liquid to thereby enable the contents of the internal chamber to thereby flavour the liquid.

Optionally, at least a portion of the main body comprises an external wall comprising at least one layer of water-soluble or water-disintegratable material.

Optionally, the portion of the main body comprising the external wall comprises a wall of the ingredient dispensing portion. Thus, the ingredient dispensing portion may comprise an external wall comprising one or more layers of water-soluble or water-disintegratable material.

Optionally, the portion of the main body comprising the external wall comprises the stirrer portion. Thus, the stirrer portion may comprise an external wall comprising one or more layers of water-soluble or water-disintegratable material.

Optionally, the portion of the main body comprising the external wall comprises substantially the entirety of the main body. Thus, an external wall of substantially the entire main body of the ingredient dispenser may comprise one or more layers of water-soluble or water-disintegratable material. In some examples, substantially the entire external wall of the main body comprises water-soluble or water-disintegratable material.

Optionally, the portion of the external wall comprises a single sheet of water-soluble or water-disintegratable material. Thus, the portion of the external wall comprising the water-soluble or water-disintegratable material comprises a single sheet of water-soluble or water-disintegratable material, thereby providing a continuous layer of water-soluble or water-disintegratable material.

Optionally, the portion of the external wall comprises a single sheet of rolled water-soluble or water-disintegratable material. The external wall, or the main body of the ingredient dispenser, may therefore comprise a plurality of rolled layers of water-soluble or water-disintegratable material, constructed from a single sheet of material. Alternatively the layers of material may instead be formed by folding a single sheet or multiple sheets of the material. A single sheet provides for easy construction of the ingredient dispenser.

Optionally, the number of layers of the water-soluble or water-disintegratable material of the portion of the external wall varies along the length of the external wall. An external wall comprising a varying number of layers of material along its length provides for portions of the external wall with varying resilience or resistance to the liquid, according to the number of layers of material, thereby varying the rate of disintegration or the rate at which the external walls dissolve in the liquid along the length of the main body.

Optionally, adjacent portions of the material are steam-pressed together. Steam-pressing is a particularly advantageous method of sealing or adjoining adjacent portions of material, particularly for some particular types of material, for example rice paper, as it is cheap, does not require the application of inedible chemicals and does not leave a residue within, or contaminate, the liquid as some adhesives might. Steam-pressed seals are further advantageous as they may readily and easily release upon contact with liquid, particularly hot liquid, and may even release in the presence of steam or water vapour, such as that which might rise from a hot drink or soup.

Optionally, adjacent portions of the material are adhered together by adhesive. Adhesive provides for a particularly strong bond or seal between adjacent portions of material.

Optionally, the adhesive is water-soluble. Water-soluble adhesives will leave reduced residue at the bottom of the liquid container after the ingredient dispenser has been used. Preferably, the water-soluble adhesive is also edible or food-safe.

Optionally, the internal chamber is formed by the folding together of a portion of the material. Forming the internal chamber by folding together portions of the material enables the internal chamber to be readily constructed and to readily open in order to thereby release ingredient into the liquid. Folding is additionally or alternatively an easy way of constructing a shape or volume, such as the internal chamber, from a sheet of material.

Optionally, the folded portions are steam-pressed together. Steam-pressing the folded portions together is particularly advantageous as it enables the folded portions to readily unfold and detach from each other to thereby release ingredient into the liquid to be flavoured. Stream-pressing is also a cheap, easy, hypoallergenic and chemical-free way of adjoining or adhering two surfaces or walls of the ingredient dispenser together.

Optionally, the single sheet of rolled material comprises the ingredient dispensing portion. A single sheet of rolled material may comprise the ingredient dispensing portion in a tubular recess or pocket formed along the longitudinal axis of the main body.

Optionally, the single sheet of rolled material comprises the stirrer portion. A single sheet of rolled material comprising the stirrer portion is particularly advantageous as a single rolled sheet of material is particularly rigid and stiff, thereby providing an easy to construct stirrer portion.

Optionally, the single sheet of rolled material comprises substantially the entirety of the main body. A main body comprising a single sheet of rolled water-disintegratable or water-soluble material provides for an ingredient dispenser having a main body which is both substantially entirely disintegratable in water or soluble in water and also easy and cheap to manufacture, while appearing home-made and environmentally friendly.

Optionally, the portion of the external wall comprises beeswax. Beeswax has been identified as a particularly advantageous material for providing a water-resilient layer to an external surface or wall of a portion of the main body. A beeswax layer provides protection to the material underneath, acting as a barrier so that the portion of the main body may maintain its integrity for longer than if the beeswax had not been applied. Beeswax is particularly advantageous as it is a naturally-occurring product and therefore may be perceived as being healthy, or at least heathier, or otherwise more preferable, than a synthetic product. Beeswax has the additional benefit of itself being a flavourant. Optionally, the portion of the external wall that comprises beeswax comprises the stirrer portion. A stirrer portion comprising a beeswax layer or barrier enables the stirrer portion to have increased resistance or resilience against the dissolving or disintegrating action of the water, thereby enabling the stirrer portion to retain its shape or configuration for longer than if beeswax had not been applied or for longer than areas which do not comprise a beeswax layer, for example the ingredient dispensing portion, thereby enabling the stirrer portion to be used as a stirrer for a longer period of time before the stirrer portion disintegrates or dissolves. For example, a layer of beeswax enables the stirrer portion to remain substantially rigid or to otherwise maintain its shape or configuration for the duration that the ingredient dispenser is being using to flavour the liquid such that, after use, the stirrer portion may remain.

Optionally, the beeswax is a layer of beeswax applied to the external surface of the portion of the external wall.

Optionally, the wall of the ingredient dispensing portion comprises fewer layers of the water-soluble or water-disintegratable material than the number of layers of water-soluble or water-disintegratable material of an external wall of the stirrer portion. Such a feature provides that the external wall of the stirrer portion has more layers of water-disintegratable material or water-soluble material than the wall of the ingredient dispensing portion, therefore enabling that portion of the stirrer portion to be more resilient to the action of the liquid including water than the ingredient dispensing portion, thereby providing that the ingredient dispensing portion disintegrates or dissolves before the stirrer portion such that the stirrer portion may still be used as a stirrer even after the ingredient dispensing portion has partly or wholly disintegrated or dissolved.

Optionally, the water-soluble material or water-disintegratable material is edible. A water-soluble material or water-disintegratable material which is edible provides that the beverage may still be consumed after the ingredient dispenser has dissolved or disintegrated in the liquid including water. Any material which remains, after use, a part of the ingredient dispenser may also be eaten or otherwise consumed directly from the ingredient dispenser itself.

Optionally, the water-soluble material or water-disintegratable material is rice paper. The rice paper may be any type of rice paper, for example potato starch rice paper.

Optionally, the water-soluble material or water-disintegratable material is seaweed.

Optionally, the main body comprises a single sheet of material.

Optionally, the main body comprises a separation facilitating means for enabling a portion of the main body to separate from the remainder of the main body at a predetermined location on the main body.

The present invention may be carried out in various ways and a preferred embodiment of an apparatus for assisting with the application of a garment in accordance with the invention will now be described by way of example with reference to the accompanying drawings, in which:
Fig. 1 is a top plan view of a preferred embodiment of an ingredient dispenser according to a first embodiment of the present invention wherein an internal payload compartment is shown open or unfolded, prior to being folded closed and sealed
Fig. 2 is a top plan view of the embodiment of Fig. 1 wherein the internal payload compartment is shown as having been folded closed and sealed;
Fig. 3 is a side view of the embodiment of Fig. 1 wherein the internal payload compartment is shown as having been folded closed and sealed;
Fig. 4 is a plan view of a template for manufacturing a series of ingredient dispensers according to the embodiment of Fig. 1 from a single sheet of material;
Fig. 5 is a cross-sectional side view of a preferred embodiment of an ingredient dispenser according to a second embodiment of the present invention, taken along a midline wherein the internal payload compartment is shown open or unfolded, prior to being folded and sealed;
Fig. 6 is an end-on view of the embodiment of Fig. 5 viewed from the distal end of the ingredient dispenser which comprises the internal payload compartment, with the internal payload compartment having been folded closed and sealed;
Fig. 7 is an end-on view of the embodiment of Fig. 5 viewed from the proximal end of the stirrer portion, along line A-A.
Fig. 8 is a top plan view of a preferred template for manufacturing an ingredient dispenser according to the embodiment of Fig. 5 from a single sheet of material;
Fig. 9 is a perspective side view of a single sheet of material according to the template of Fig. 8 being rolled to form an ingredient dispenser according to the embedment of Fig. 5 and wherein an ingredient capsule, cartridge or receptacle is shown being rolled up within the single sheet of material;
Fig. 10 is a side view of an ingredient dispenser according to the embodiment of Fig. 5, constructed from the template of Fig. 8;
Fig. 11 is a plan view of a preferred embodiment of a sealed ingredient dispenser according to a third embodiment of the present invention, wherein a cross-sectional view of a portion of the distal end of the ingredient dispenser is shown in order to illustrate the internal compartment and ingredient contained therein;
Fig. 12 is a side view of the embodiment of Fig. 11 illustrating that the sides of the ingredient dispenser of this embodiment are substantially the same shape, with the only difference being the orientation of the diametrically extending flat tabs of the ingredient dispensing portion;
Fig. 13 is an end-on view of the embodiment of Fig. 11 viewed from the distal end of the ingredient dispenser which comprises the ingredient dispensing portion, wherein the flat tabs of the flavourant dispensing portion are shown sealed together to thereby seal the internal compartment of the flavourant dispensing portion;
Fig. 14 is an end-on view of the embodiment of Fig. 11 viewed from the proximal end of the flavourant dispenser, i.e. from the opposite end to that shown in Fig. 13, showing the arrangement of the layers of material which form the stirrer portion;
Fig. 15 is a top plan view of an alternative preferred template for manufacturing from a single sheet of material a preferred embodiment of an ingredient dispenser according to a third embodiment of the present invention; and
Fig. 16 is a side view of a preferred embodiment of an ingredient dispenser according to a third embodiment of the present invention made using the template of Fig. 15.
Fig. 17 is a cross-sectional plan view of the embodiment of Fig. 16 taken approximately along the centreline of the ingredient dispenser;
Fig. 18 is a perspective view of the embodiment of Fig. 16, viewed with the distal end of the ingredient dispenser, and therefore with the ingredient dispensing portion, in the foreground, while the proximal end, and therefore the stirrer portion, is shown in the background;
Fig. 19 is a perspective view of the embodiment of Fig. 16, similar to the view of Fig. 18 but with the proximal end, and therefore with the stirrer portion, shown in the foreground;
Fig. 20 is an end-on view of the distal end of the ingredient dispenser which comprises the ingredient dispensing portion; and
Fig. 21 is an end-on view of the proximal end of the ingredient dispenser which comprises the stirrer portion.

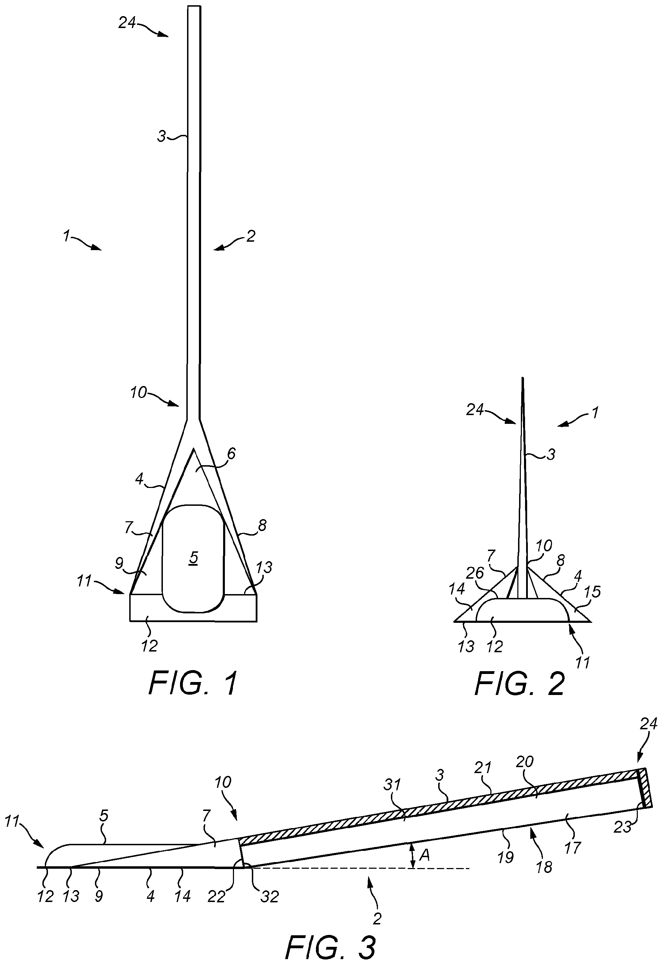

An ingredient dispenser 1 according to a first preferred embodiment of the present invention is shown in Fig. 1. The ingredient dispenser 1 comprises a main body 2 comprising a substantially elongate grippable portion, or stem 3, at one end and an ingredient dispensing portion 4 at the other substantially opposing end of the main body 2 and at one end of the stem 3. The ingredient dispensing portion 4 is so-called as that is the portion of the main body 2 which dispenses ingredient 5, in the example of Fig.1, from within an internal chamber 6 located within the ingredient dispensing portion 4.

The substantially elongate grippable portion, or stem 3, is configured to enable a user to grasp the ingredient dispenser 1 and to enable him or her to stir a liquid, such as a drink or food (e.g. soup), while being long enough to allow the user to maintain their fingers a comfortable distance from the surface of the liquid. This is particularly advantageous in order to minimise the possibility of liquid coming into contact with the user's fingers, for example while the liquid is being stirred, when the liquid may splash up out of its container and onto the ingredient dispenser 1. The elongate stem 3 is additionally advantageous when the ingredient dispenser 1 is to be used with hot liquids which may give off steam as the user's fingers are able to be maintained a sufficient distance from the surface of the liquid such that the steam does not make their fingers uncomfortably hot or cause them to burn. As the stem portion 3 is partly for enabling the user to hold the ingredient dispenser 1 so that he or she may stir the liquid to be flavoured with the stem portion 3, the stem portion 3 may also be referred to as the stirring portion or stirrer portion 3 of the main body 2.

An ingredient dispensing portion 4 of the main body is provided at a distal end of the stirrer portion 3. In the embodiment shown in Fig. 1, the ingredient dispensing portion 4 is configured such that its walls 7, 8 may be folded together to form an internal compartment, pocket or chamber 6 for receiving and containing a quantity of ingredient 5.

In this regard, the ingredient dispensing portion 4 in its unfolded configuration, as shown in Fig. 1, comprises two substantially upright side walls 7, 8 which are angled, or flared, apart from each other and which meet at the proximal end 10 of the ingredient dispensing portion 4, namely the end of the ingredient dispensing portion 4 which is closest to the stem 3, and a substantially flat and triangular floor 9 extends substantially between the two upright walls 7, 8, and perpendicular to them, and which extends the entire length of the two upright side walls 7, 8. The side walls 7, 8 are tapered or slanted such that their height reduces along their length away from the stem 3 (i.e. towards the distal end 11 of the ingredient dispenser 1) and ending at a tip at the floor 9 of the internal compartment 6. A substantially flat foldable tab 12 is provided along a distal edge 13 of the floor, or base 9, substantially coplanar with the floor, or base, 9.

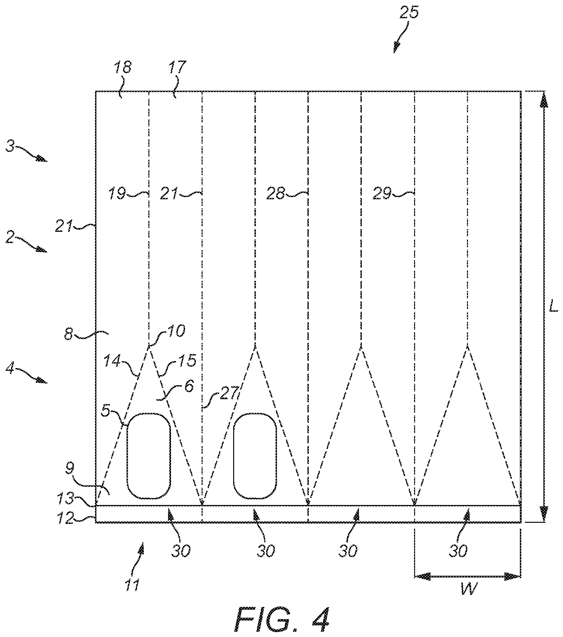

A crease or foldline 14, 15 (see Fig. 4) is provided at each join or junction between the upright side walls 7, 8 and the floor 9 and at the join or junction between the tab 12 and the floor 9 and, as such, the creases or foldlines 14, 15 extend along the entire length of the base of each of the upright side walls 7, 8 and the length of the tab 12. The creases or foldlines 14, 15 therefore foldably connect the upright side walls 7, 8 and the tab 12 to the floor 9 and enable the side walls 7, 8 to be folded towards each other and substantially together and enable the tab 12 to be folded up towards the side walls to form the internal compartment 6 or pocket for containing ingredient 5.

In this way, the side walls 7, 8 and the floor 9 create a scoop-like distal end of the ingredient dispenser 11 which may be used for scooping ingredients 5 into the internal compartment 6. Such an arrangement is particularly useful in manufacturing ingredient dispensers 1 according to the present invention as it enables ingredient 5 to be easily placed and retained within the ingredient dispensing portion 4 prior to the side walls 7, 8 and tab member 12 being folded together and sealed to form the internal compartment 6.

Thus, an internal compartment 6 of the ingredient dispensing portion 4 of the main body 2 may be formed by folding the side walls 7, 8 towards each other and together, and then by folding the tab member 12 upwards and towards the folded side walls 7, 8. In order to maintain this folded configuration or shape, and in order to form an sealed internal compartment 6, the folded side walls 7, 8 and tab member 12 may be sealed together, for example by steam-pressing or by an adhesive, for example a water-soluble adhesive. The folded configuration of the ingredient dispenser is shown in Fig. 2.

Prior to the ingredient dispenser 1 being folded and sealed into the folded configuration, an ingredient 5, for example sugar, salt, spices, honey, syrup, etc., may be provided within the space defined by the side walls 7, 8 and the floor 10 such that the ingredient 5 is contained and sealed within the internal compartment 6 when the side walls 7, 8 and the tab member 12 are folded and sealed together.

Although the internal compartment 6 may contain only a single ingredient 5, examples are envisaged wherein the internal compartment 6 may contain a mixture of ingredients. Although some ingredients 5, for example salt or sugar, may be provided loose within the internal compartment 6, some other ingredients, for example honey, may be provided within a separate capsule or cartridge 16, or other any other kind of suitable container, which may be inserted within the space between the side walls 7, 8 and the floor 9 of the ingredient dispensing portion 4 (i.e. within the internal compartment 6) and which may be contained within the internal chamber 6 formed by the folding and sealing together of the side walls 7, 8 and the tab, or flap, member 12.

Such capsules or cartridges 16 may therefore assist with more securely containing the ingredient 5 within the internal compartment or chamber 6 of the ingredient dispenser 1 and are therefore particularly advantageous for use with liquid ingredients 5 that may otherwise seep or leak out from within the internal chamber 6 or which may contaminant, or be absorbed by, the walls 7, 8, 9 of the ingredient dispensing portion 4.

In order to efficiently release the ingredient 5 stored within the capsules or cartridges 16 into the liquid to be flavoured, the capsules or cartridges 16 may be provided with a contents releasing means, such as a valve. Alternatively, at least a portion, and in some examples all, of the capsule or cartridge 16 may be dissolvable or disintegratable within the liquid to be flavoured and, as such, may comprise or be made from water-soluble or water-disintegratable material in examples wherein the flavourant dispenser is intended to be used to flavour a liquid comprising or including water. Where the liquid to be flavoured is or comprises water, the capsules or cartridges 16 may be water-soluble or otherwise configured to disintegrate within the water and to thereby release the contents (i.e. the ingredient 5) of the capsule 16 into the water.

The stem portion 3 of the main body 2 of the ingredient dispenser 1 extends from the ingredient dispensing portion 4 of the main body 2 and is inclined with respect to the longitudinal axis of the ingredient dispensing portion 4 and to the plane of the floor 9 of the internal compartment 6, as shown by angle A in Fig. 3. The stem portion 3 is substantially rectangular in cross-section, having a height which is greater than its width (where the depth is the distance along the longitudinal axis of the stem portion 3), and the cross-section of the stem portion 3 is substantially constant along its length, although examples wherein the cross-section of the stem 3 varies along its length are also envisaged.

The stem portion 3 comprises two substantially parallel walls 17, 18 which are folded together at their base along a centreline 19 such that the two walls are substantially of the same height as each other. The two stem walls 17, 18 are maintained together by a seal 20 which extends along the entire length of the top edge 21 of each of the side walls 17, 18 of the stem portion 3. The seal 20 may be formed by steam-pressing the top edge 21 of the two walls 17, 18 together or by adhesive, or any other suitable means.

In order to fully seal the internal compartment 6 to provide a closed volume, a further seal 22 is provided. In the example of Fig. 1, the join of the ingredient dispensing portion 4 and the stirrer portion 3 is steam-pressed, see Fig. 3, to thereby close the top of the ingredient dispensing portion 4 and to limit the volume of the internal compartment 6 to the ingredient dispensing portion 4 such that its contents 5 are unable to extend or migrate into the stirrer portion 3.

Additionally or alternatively, a further seal 23, for example a steam-pressed seal, may be provided at the proximal end 24 of the stirrer portion 3, extending laterally, to seal the end of the stirrer portion 3. When seal 23 is provided at the proximal end 24 of the stirrer portion 3, the seal 22 between the ingredient dispensing portion and the stirrer portion may be redundant and may therefore be omitted, thereby causing the volume of the internal compartment 6 to extend into the stirrer portion 3 and thereby enabling ingredient 5 to be provided in, or to enable the contents 5 of the ingredient dispenser 1 to move into, the stirrer portion 3.

In Fig. 3 the ingredient 5 to be contained within the internal compartment 6 is shown in side view as extending above the height of the side walls 7, 8 of the ingredient dispensing portion 4. In this example, the ingredient 5 is a powder and, as such, when the side walls 7, 8 and the tab member 12 are folded together for sealing, the ingredient 5 is packed further into the internal compartment 6 to fill its internal volume.

A template for constructing a plurality of ingredient dispensers 1 according to the embodiment shown in Figs. 1, 2 and 3 from a single sheet of material 25 is shown in plan view in Fig. 4.

Although in a preferred example, the entire main body 2, i.e. both the stem portion 3 and the ingredient dispensing portion 4, may be made from a single, continuous sheet of material 25, examples are envisaged wherein the ingredient dispenser 1 is manufactured from multiple separate pieces of material are envisaged and wherein the separate pieces or sections of material are adhered together in order to maintain the overall form, shape or integrity of the ingredient dispenser 1. As such, examples wherein the ingredient dispensing portion 4, or a portion thereof, is manufactured from one sheet of material 25 and wherein the stem portion 3, or a portion thereof, is manufactured from a different sheet of material are envisaged.

The template of Fig. 4 illustrates a template for constructing four ingredient dispensers 1 according to a first preferred embodiment of the present invention from a single sheet of material 25.

In a preferred example of the present invention, the single sheet of material 25 is liquid-disintegratable such that it is configured to disintegrate upon the exposure or contact of the material 25 with a particular liquid such that an ingredient dispenser 1, or a portion thereof, comprising such a material 25 disintegrates, or is configured to disintegrate, when the ingredient dispenser 1 is exposed to the particular liquid the material 25 is liquid-disintegratable with respect to. For example, in examples wherein the material 25 is water-disintegratable, the ingredient dispenser 1, or a portion thereof, is configured to, and therefore would, disintegrate when the ingredient dispenser 1 contacts or is exposed to water.

Although in the example of Fig. 1, the entire main body 2 is manufactured from a liquid-disintegratable material 25 (and therefore substantially the entire main body 2 of the ingredient dispenser 1 is configured to be liquid-disintegratable), examples wherein only a portion or section of the main body 2 comprises liquid-disintegratable material 25 are also envisaged, for example the stirrer portion 3 or the ingredient dispensing portion 4.

In examples wherein the ingredient dispensing portion 4 comprises liquid-disintegratable material 25, when the ingredient dispensing portion 4 is exposed to the particular liquid that the material 25 is liquid-disintegratable with respect to, the ingredient dispensing portion 4 will disintegrate and thereby release the contents 5 of the internal compartment 6 into the liquid.

Thus, in use, the user places the ingredient dispenser 1 in the liquid to be flavoured and the portion of the ingredient dispenser which comprises water-disintegratable material or water-soluble material 25 and which is exposed to the liquid disintegrates, thereby releasing the ingredient 5 stored within the internal compartment 6 into the liquid. The user then may stir the liquid with the stirrer or stem portion 3 of the main body 2 to ensure adequate mixing of the ingredient 5 and, where the ingredient 5 is soluble in the liquid, to accelerate the dissolving of the ingredient 5 in the liquid. Thus, the specific material 25 of the ingredient dispensing portion 4 may be selected according to the liquid that the ingredient dispenser 1 is intended to flavour, or at least dispense ingredient into.

In a preferred example and in the example of Fig. 1 (as well as in the examples of all of the other embodiments of the present invention shown), the entire main body 2, i.e. the stem portion 3 and the ingredient dispensing portion 4, of the ingredient dispenser 1 is manufactured from rice paper and, as rice paper disintegrates upon exposure to water, substantially the entirety of the main body 2 of the ingredient dispenser 1 of Fig. 1 is configured to disintegrate in its entirety upon exposure to water. After the user has finished stirring the liquid with the stirrer portion 3 and the liquid is allowed to rest, the disintegrated parts of the ingredient dispenser 1 collect at the bottom of the liquid container, e.g. cup or mug, and remain there even while the liquid is being consumed such that the remnants of the disintegrated material 25 may be disposed of after the liquid has been consumed. Thus, liquid-disintegratable material 25 is particularly advantageous for flavouring liquids in disposable containers, for example in disposable coffee cups, as the remnants of the ingredient dispenser 1 may be disposed of along with the disposable container.

In examples of all of the embodiments of the present invention where the stirrer portion 3, in addition to the ingredient dispensing portion 4, comprises liquid-disintegratable material 25, the stirrer portion 3 may also disintegrate while the user stirs the liquid (for example if the stirrer portion is exposed to the liquid), however the stirrer portion 3 may be configured such that the rate at which the stirrer portion 3 disintegrates is slower than the rate at which the ingredient dispensing portion 4 disintegrates. In certain examples, this is achieved by the stirrer portion 3 having a lower surface-to-volume ratio than the ingredient dispensing portion 4. In order to alternatively or additionally vary the rate at which the stirrer portion disintegrates with respect to the rate that the flavourant dispensing portion disintegrates, different thicknesses of the liquid-disintegratable material 25, i.e. the wall thickness, may be provided for different portions of the main body 2, for example, the wall thickness of the stirrer portion 3 may be greater than a portion of the ingredient dispensing portion 4, for example by the provision of more layers of the liquid-disintegratable material 25 in the stirrer portion 3 than in the ingredient dispensing portion 4. More layers of material cause the rate of disintegration to be reduced.

Although in the example of Fig. 1, rice-paper is used as the water-disintegratable material 25, any other such suitable material or materials are also envisaged for all of the embodiments of the present invention. Some water-disintegratable materials may be more advantageous than others, for example some may have a greater or lower rate of disintegration (a greater rate of disintegration is advantageous for the flavourant dispensing portion while a lower rate of disintegration is advantageous for the stirrer portion), others may be biodegradable, others may be food safe and edible, while others still may in themselves be flavoured or have their own flavour or may be an ingredient or form a component of a meal. Of course, some materials may possess a combination of such properties, and in this regard, rice paper is particularly suited to the present invention. Rice paper is also particularly advantageous for hypoallergenic reasons and also because it can be easily steam pressed to thereby enable the dispenser to be easily manufactured and to easily enable portions or the material to be sealed together.

As well as rice paper, seaweed has also been identified as being particularly suited to the present invention because an ingredient dispenser 1 comprising seaweed could be used wherein the ingredient dispenser 1 is to be used to flavour dishes which ordinarily, customarily or traditionally comprise seaweed, for example miso soup. For miso soup, examples wherein, as well as at least a portion of the main body 2 comprising seaweed, the ingredient dispenser 1 also comprises miso soup stock, for example within the internal compartment 6 of the ingredient dispensing portion 4, or provided on an inner or outer surface of the material 25 of the main body 2 itself, are also envisaged.

Although the material 25 of the example of Fig. 1 is configured to disintegrate when exposed to water and thereby cause the ingredient 5 contained within the internal compartment 6 to be released into the water, the rate at which the ingredient 5 is released from the internal compartment 6 may be increased by the walls of the internal compartment 6 (i.e. the walls 7, 8 of the ingredient dispensing portion 4) being steam-pressed together when folded together into the folded configuration as shown in Fig. 2 (whereas Fig. 1 shows the unfolded configuration) as this causes the internal compartment 6 to open, and thereby release flavourant, shortly after the flavourant dispenser is exposed to liquid. As such, when the steam-pressed walls 7, 8 are exposed to a liquid, particularly a hot liquid, the steam-pressed seal which holds them together via tab 12, and which maintains the internal chamber 6, is prone to easily and readily release and cause the internal compartment 6 to open and allow its contents 5 to be released from ingredient dispensing portion 4 of the ingredient dispenser 1 and into the liquid.

Furthermore, the provision of steam-pressed seals 21, 22, 23, 26 provides for a cheap and easy means of sealing the internal compartment 6 and for maintaining the folded configuration of the ingredient dispenser 1. Steam-pressed seals are particularly advantageous as they do not leave a residue after the ingredient dispenser has disintegrated or dissolved, as some adhesives or other sealing means might.

In addition to the walls of the internal compartment 6 of the example of Fig. 1 being steam-pressed together, the walls 17, 18 of the stem or stirrer portion 3 are also steam pressed together to maintain their folded shape or configuration, the walls being sealed by steam-pressed seals along their top (upper) longitudinal edge 21.

Additionally or alternatively to the material 25 being liquid-disintegratable, the material 25 of all embodiments may be soluble such that it is configured to dissolve in the liquid to be flavoured. In the example of Fig. 1, as the material 25 is rice-paper, not only does it disintegrate upon exposure to water, it also substantially dissolves in the water. Other such examples of suitable liquid or water soluble materials may equally be used, for example edible sugar sheets. An advantage of a portion or substantially the entirety of the main body 2 of the ingredient dispenser 1 comprising a liquid or water soluble material is that the residue of the ingredient dispenser 1 that would collect at the bottom of the liquid container is reduced or eliminated. A further advantage, as in the case of edible sugar sheets, is that the soluble material 25 itself, in addition or alternatively to ingredient 5 in the internal compartment 6, may affect, for example alter or enhance, the flavour of the liquid. Furthermore, when the ingredient dispenser 1 is constructed from edible material, rather than throwing the remainder of the ingredient dispenser 1 away after use, it can be consumer by the user, thereby reducing the amount of waste resulting from the use of the ingredient dispenser.

One example of the present invention may comprise a main body 2 constructed from one or more pieces of steam-pressed seaweed and as such, although the seaweed is not water-soluble, the main body is water-disintegratable because the structure of the main body will disintegrate and lose its structural integrity when exposed to water, particularly hot water, due to the deterioration of the steam-pressed seals caused by exposure to the water, thereby releasing the joined portions of the seaweed.

As can be seen in Fig. 4, the sheet of material 25 used for the template is substantially square and, as such, the maximum width W of the floor 9 of the internal compartment 6 of each of the four ingredient dispensers 1 is about a quarter of the overall length L of the main body 2 of each ingredient dispenser 1.

Three longitudinal, and in Fig. 4, vertical dashed lines 27, 28, 29 extending the entire height of the sheet, i.e. the entire length of each ingredient dispenser 1, denote cut lines to indicate where the sheet of material 25 should be cut or divided in order to form the four separate ingredient dispensers 1. The three cut lines 27, 28, 29 are equally spaced from each other and from the side edges of the sheet of material 25 such that the width W of each of the ingredient dispensers 1 when flat (and thereby the height of the stem portion 3 when folded) is substantially equal between each of the four ingredient dispensers 1.

In Fig. 4, ingredient 5 is shown placed on the floor 9 of the internal compartment 6 of two of the strips of material (i.e. of two of the four ingredient dispensers 1) for illustrative purposes in order to indicate where ingredient 5 may to be applied to the ingredient dispenser 1 such that ingredient may be located within the internal compartment 6 after the ingredient dispensers 1 have been folded and sealed and after each of the four ingredient dispensers 1 have been cut out of the single sheet of material 25, however examples are envisaged wherein ingredient 5 may be pre-applied, for example adhered, to the single sheet of material 25 substantially in the portion of the sheet of material 25 which becomes the floor 9 of the internal compartment 6 after the ingredient dispenser 1 has been fully folded and assembled.

In examples wherein the ingredient 5 is a liquid, for example honey, a capsule 16 for containing the liquid may be provided on the sheet of material 25 and may be adhered to it. In this way, a single sheet of material 25 with pre-applied ingredient 5 may be provided and the four ingredient dispensers 1 may be cut from this single sheet of material 25. A capsule may also be used when the ingredient is not a liquid but is, for example, a powder.

Although the example of the template shown in Fig. 4 is for manufacturing four ingredient dispensers 1 from a single sheet of material 25, examples wherein any number of ingredient dispensers 1 may be manufactured from a single sheet of material 25 are also envisaged.

Such examples may include templates for manufacturing ingredient dispensers 1 of a number of different sizes and shapes from the same single piece of material 25.

Similarly, although the template shown in Fig. 4 demarks four ingredient dispensers 1 arranged in a single row wherein the ingredient dispensers 1 are arranged side-by-side, adjoined by their longitudinal edges, examples wherein the ingredient dispensers 1 are arranged in multiple rows on a single sheet of material 25 and/or wherein ingredient dispensers 1 are adjoined on their lateral edge to form a strip or a roll or reel of ingredient dispensers 1 to be manufactured from a single sheet of material 25 are also envisaged.

In addition to the three longitudinal cut-marks 27, 28, 29 denoting where the single sheet of material 25 is to be cut in order to form the separate ingredient dispensers 1, Fig. 4 also demarks the central fold-line 19 or crease of the stem portion 2 of each of the four ingredient dispensers 1, as well as the fold-line or crease 14, 15 of each of the two side walls 7, 8 of the internal compartment 6 of the ingredient dispensing portion 4 of each ingredient dispenser 1. The central fold-line or crease-line 19 extends longitudinally down the centre of each strip of material (along the centreline of each strip), from one end of the strip to approximately three quarters of the length of the strip of material 25.

Where the central, longitudinal fold-line 19 ends, a fold-line or crease 14, 15 extends from that point to each of the corners of the strip. In this way, one fold-line 14 extends from the end of the central, longitudinal fold-line 19 towards one of the corners of the nearest end of the strip while the other fold-line 15 extends from the end of the central, longitudinal fold-line 19 towards the other corner of that end. Thus, the two fold-lines 14, 15 which extend from the end of the central, longitudinal fold-line 19 are angled apart from each other and form a substantially isosceles triangular portion therebetween which is to become the floor 9 of the internal compartment 6 of the ingredient dispensing portion 4 once the ingredient dispenser 1 has been folded and assembled.

Thus, in order to manufacture a single ingredient dispenser 1 from a single square sheet of material 25 according to the template of Fig. 4, the single sheet of material is cut along one of the three vertical (longitudinal) dashed lines 27, 28, 29 to divide the single sheet of material 25 into four separate substantially rectangular strips 30 of material. One rectangular strip 30 is then folded along all three fold-lines (i.e. the central, longitudinal fold line 19 and the two angled apart fold-lines 14, 15 extending therefrom). The two lateral sides forming side walls 17, 18 of the stirrer portion 3 on either side of the central longitudinal fold-line 19 are pressed together to form the stirrer portion 3 and the longitudinal top edges 21 are sealed together by a steam-pressed seal or spine which is applied to those edges, along and parallel to the entire length of the central, longitudinal fold-line 19.

Simply by adjoining these two side faces 17, 18, the stirrer portion 3 is formed and the stirrer portion 3 automatically becomes inclined with respect to portion of the strip 30 which is to become the floor 9 of the internal compartment 6 of the ingredient dispensing portion 4.

An optional additional seal 23, e.g. a steam-pressed seal, may be provided at the proximal end of the stirrer portion to close that end of the stirrer portion. An additional or alternative seal 22 may be provided at the junction of the central, longitudinal fold-line 19 and the two angled-apart, side wall fold lines 14, 15 to define the volume of the internal compartment 6 and to prevent ingredient 5 from entering the stirrer portion 3. In order to facilitate assembly, the fold-lines 14, 15, 19 may be marked, for example printed or sprayed, onto the surface of the material 25 or strip of material 30.

In order to seal ingredient 5 inside internal compartment 6 of the ingredient dispenser 1, ingredient 5 is placed on the section of the strip 30 which becomes the floor 9 of the internal compartment 6 if ingredient is not already provided there. The two angled-apart side walls 7, 8 of the internal compartment are then pinched or folded together and the tab member 12 is folded along its fold-line 13 and folded against the pinched or folded together side walls 7, 8. The tab member 12 and the two angled-apart side walls 7, 8 are then sealed together by a steam-pressed seal 26, thereby sealing the internal compartment 6.

Although in the example of Fig. 1, ingredient 5 is provided in the internal compartment 6 when it is folded together and sealed, additionally or alternatively the material 25 of a portion of the ingredient dispenser 1 of any of the embodiments of the present invention may also comprise ingredient 5, for example the material 25 of the ingredient dispensing portion 4 or of the stirrer portion 3 may comprise ingredient 5.

In examples such as these, the material 25 itself may be an ingredient 5, for example seaweed or sugar sheets, or it may have ingredient 5 additives dispersed throughout the thickness of the material 25, or even have ingredients 5 added to the internal or external surface of at least a portion, or even the entirely, of the main body 2. For example, granules of ingredient 5 may be adhered to an internal or external surface of the material 25 of a portion of the main body 2, for example an internal or external surface of the stirrer portion 3, flavourant dispensing portion 4 or internal compartment 6, or a layer of ingredient 5 may additionally or alternatively be provided. For example, a layer of beeswax or a sugar solution may be provided on an external surface of the main body 2, for example the stirrer portion 3. Such a layer could be applied by dipping the portion of the main body 2 to be coated in a liquid of the ingredient 5. The layer of ingredient 5 would then set when the portion of the main body 2 is removed from the liquid ingredient to form a solid external coating or layer of ingredient 5.

In order to vary or control the rate at which the ingredient dispenser 1, or a portion thereof with respect to another portion, disintegrates or dissolves in the liquid, a resilient layer 31 may be added to an external surface or wall of at least a portion or substantially the entirety of the main body 2 of any of the embodiments of the present invention, for example the ingredient dispensing portion 4 and/or the stirrer portion 3.

Such a layer 31 controls or limits the exposure of the liquid disintegratable or soluble material 25 underneath to the liquid and it may do so by providing a resilient barrier which resists the solvent action of the liquid and which may have a disintegration rate or dissolving rate which is lower than that of the liquid disintegratable or liquid soluble material 25 of at least a portion of the main body 2.

Additionally, such a layer 31 assists in maintaining the structural integrity of the ingredient dispenser 1 and, as such, it is particularly advantageous when the stirrer portion 3 is provided with such a layer because such a stirrer portion 3 is more able to withstand the liquid and to retain its structural integrity and shape for longer, thereby enabling the stirrer portion to be exposed to the liquid for a longer duration so that it can continue to be used for stirring the liquid for a longer time, and in examples where the ingredient dispensing portion 4 does not comprise such a layer 31, the stirrer portion 3 may continue to be used even after the ingredient dispensing portion 4 has completely or substantially disintegrated or dissolved in the liquid.

The resilient layer may also serve as a stiffening means for stiffening the stirring portion 3 to prevent it from buckling or otherwise deforming, both while in storage and also while in use.

Additionally, the resilient layer may serve as a sealant to seal the external surface or wall of at least a portion of the main body 2, for example the stirrer portion 3, and/or to assist in maintaining the folded or rolled shape or configuration of the main body 2.

It has been found that a layer of beeswax is a particularly advantageous example of such a resilient layer. In the example of Fig. 3, a layer of beeswax is provided on the external surface of the stirrer portion, from its proximal end 24 to its distal end 32.

Although not shown in Figs. 1 to 21, the ingredient dispenser 1 of any of the embodiments of the present invention may comprise markings on one or more of its external surfaces or walls. Such markings may indicate the brand or name of the ingredient dispenser, e.g. they may comprise a logo, or they may provide some other such information, for example they may provide instructions as to how to use the ingredient dispenser 1, for example they may indicate where the user should hold the ingredient dispenser 1 while in use or they may demark the extent of the stirrer portion 3 or ingredient dispensing portion 4, or they may indicate the quantity of ingredient 5 provided by the ingredient dispenser 4, for example within the internal compartment 6 or adhered to an external surface or wall of the main body 2, for example the stirrer portion 3. The markings may also indicate the type of flavourant 5 dispensed by the flavourant dispenser 1 and/or indicate the nutritional content of flavourant dispenser 1 or flavourant 5. The markings may take the form of a raised, or embossed, portion or a lowered, or debossed, portion of an external surface or wall of the ingredient dispenser 1, or they may be printed onto an external surface. Other suitable methods of marking are also envisaged.

In examples of any embodiment where the ingredient dispenser 1 comprises a mark or marking on one or more of its external or outer surfaces or walls to demark the extent of the stirrer portion 3 with respect to the length of the main body 2, and the outer surface or wall of the stirrer portion 3 comprises a resilient layer 31, for example beeswax, the resilient layer 31 may cover substantially the entirety of the outer surface or wall of the stirrer portion 3, up to the marking indicating the extent of the stirrer portion 3.

Although the ingredient dispensers 1 of Figs. 1 to 4 are configured to contain the same volume of ingredient 5 within their internal compartments 6 as each other, embodiments are envisaged having internal compartments 6 of different sizes, or even wherein the overall size of the main body 2 of the ingredient dispenser 1 may be different, for example the ingredient dispensers 1 may be scaled in size according to the required volume of the internal compartment 6. As such, examples wherein the internal compartment 6 of the ingredient dispenser 1, or the main body 2 as a whole, is sized so as to be able to contain certain standard quantities of ingredient 5, for example one or two sugar lumps, or any other such similar standard quantities, are envisaged. As discussed above, the quantity of ingredient 5 contained within the internal compartment 6, or otherwise dispensed by the ingredient dispenser 1, may be indicated on an external surface of the ingredient dispenser 1.

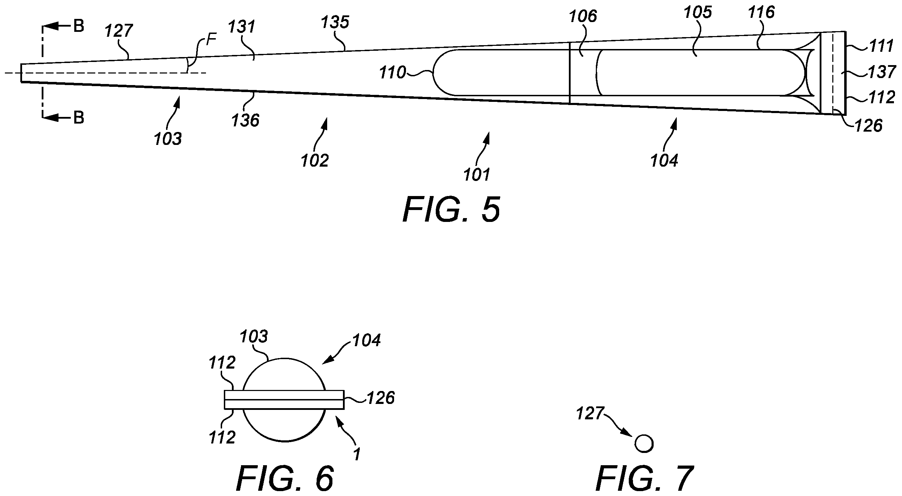

An ingredient dispenser 101 according to a second preferred embodiment is shown in Fig. 5. Ingredient dispensers 101 according to the second embodiment have the advantage over ingredient dispensers 1 according to the first embodiment of being capable of holding a greater volume of ingredient 105 within their internal chamber 106 for a given length of the main body 102. The ingredient dispenser 101 of the second embodiment comprises an elongate main body 102 comprising an ingredient dispensing portion 104 at a distal end 111 and a stirrer portion 103 at an opposing proximal end 124 of the elongate main body 102. The main body 102 is substantially conical, having a substantially circular cross-section at the tip of the main body 102, i.e. at the proximal end of the stirrer portion 124, wherein the cross-section of the main body 102, and more particularly the stirrer portion 103, increases in diameter and substantially maintains its substantially circular-cross section along the length of the elongate stirrer portion 103, ending in a substantially circular cross-section at the distal end 111 of the flavourant dispenser 101.

An internal chamber or compartment 106 is provided within the ingredient dispensing portion 104 of the main body 102 and the internal compartment 106 extends approximately half way along the length of the main body 102 of the ingredient dispenser 101. Thus, the ingredient dispensing portion 104 is provided generally or substantially at the distal end 11 of the main body 102, such that the ingredient dispensing portion 104 dispenses ingredient 105 from the distal end or tip 111 of the main body 102. The internal chamber 106 is substantially circular in cross section and it forms a recess or a pocket in which a quantity of ingredient 105 is provided. Whereas the external surface or wall of the main body 102 is substantially conical, the internal chamber 106 may be substantially cylindrical, with a substantially rounded or substantially hemi-spherical proximal end 110, such that thickness of the walls of the main body 102 (i.e. the radial distance between the wall of the internal chamber 106 and the external wall of the main body 102) increases towards the distal end 111 of the ingredient dispenser 101.

In the example of Fig. 5, ingredient 105 is contained in a soluble, for example water-soluble, capsule or sachet 116 which is provided within the internal chamber 106, towards the distal end 111 of the ingredient dispensing portion 104. The capsule 116 is substantially or generally cylindrical with generally hemispherical opposing ends. Alternatively, the capsule 116 may be flexible such that it may conform to the shape of the walls of internal chamber 106, particularly the circumferential walls. Although in this example, ingredient 105 is provided in a capsule 106, in other examples according to this embodiment a capsule 106 may not be provided and the ingredient 105 may instead be provided loose in the internal chamber 106. In such examples, the loose ingredient 105 is able to move freely within the internal chamber 106. A capsule or sachet 116 may be provided in any of the embodiments of the present invention.

The distal end of the main body 102, and therefore the distal end 111 of the ingredient dispensing portion 101, is radially collapsed from diametrically opposed sides such that the diametrically opposed walls of the ingredient dispensing portion 105 at that end are buckled and collapsed together, thereby closing the distal end of the internal chamber in two generally flat and generally rectangular tab portions 112 of the wall of the ingredient dispensing portion 104 of the main body 102. As the walls have been buckled together to form the tabs 112, the width of the tabs 112 (i.e. in the radial direction) is greater than the greatest diameter of the conical portion (i.e. the portion other than the tabs 112) of the main body 102 such that the tabs 112, when viewed from the distal end 111, extend radially beyond the circular cross-section of the conical portion of the main body 102.

The two generally rectangular tabs 112 are sealed together by a steam-pressed seal 126 which extends along the distal edge of the tabs 112, i.e. diametrically across the main body 102, thereby sealing the volume of the internal chamber 106 and preventing its contents 105 from escaping. Any other suitable means of forming a seal 126 between the tabs 112 and thereby sealing the internal chamber is envisaged, such as the use of adhesives. Where adhesives are used to seal the distal end 111 of the ingredient dispensing portion 104, water-soluble adhesive, and particularly edible water-soluble adhesive, is particularly advantageous as it may provide after use for reduced residue within the liquid to be flavoured.

An end-on view taken from the distal end of the main body 102, and therefore from the distal end 111 of the ingredient dispensing portion 104, is shown in Fig. 6 wherein the two opposed tabs 112 of the radially collapsed walls can be seen sealed together generally along a diameter of the main body 102. The circular conical stirrer portion 103 can be seen in the background.

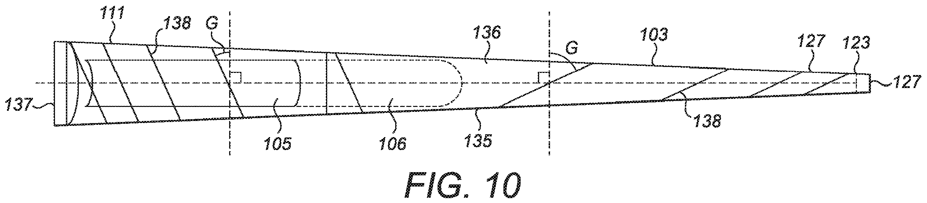

As can be seen in Fig 10, an additional seal 123 at the proximal end 124 of the stirrer portion 103 may also be provided to seal the stirrer portion 103 and to ensure the contents 105 of the internal chamber 106 do not inadvertently escape from that end 124 of the ingredient dispenser 101.

The circular cross-section of the distal end 124 of the stirrer portion 103 is shown in Fig. 7, taken along line B-B.

A resilient layer 131, in this example comprising beeswax, is provided on the external surface or wall of the main body 102. The resilient layer 131 substantially covers the entire surface of the stirrer portion 103 and a proximal portion 110 of the ingredient dispensing portion, thereby forming a continuous resilient layer 131 from the proximal tip of the ingredient dispenser 101 up to partway along the ingredient dispensing portion 104. The resilient layer 131 therefore covers, and overlaps with, a portion of the internal compartment 106.

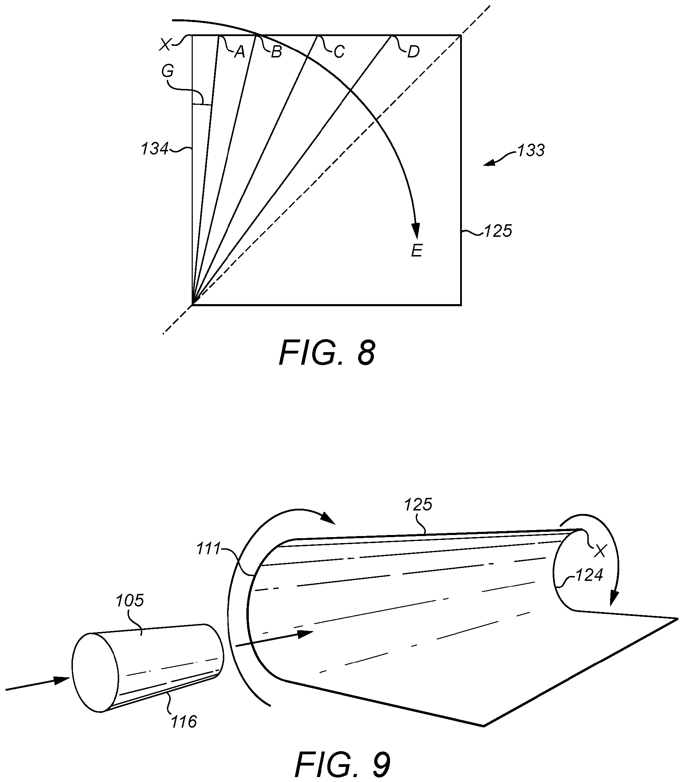

A template 133 for constructing an ingredient dispenser 101 according to the second embodiment as shown in Fig. 5 is illustrated in Fig. 8. The template 133 is a single generally square sheet or piece of material 125. A first step in constructing the main body 102 of the ingredient dispenser 101 is to fold one corner, for example corner X in Fig. 8, along fold-line A, then along fold-line B, and along each of the remaining successive fold lines (namely C and D), thereby rolling the sheet up material up to form the substantially conical main body 102, as shown by arrow E. The main body 102 is continued to be folded along successive fold lines until all of the remaining material 125 is wrapped or rolled around the main body. For clarity, only the first four fold lines A, B, C and D are shown. The cone angle F of the conical main body 102, and thereby the volume of the internal chamber 106, results from the relative angles of the fold-lines, in particularly the angle G between the first fold line A and the nearest vertical edge 134 of the sheet of material 125. Thus, the angle F of the cone and the volume of the internal chamber 106, and thereby of the quantity of ingredient 105 to be dispensed, may be selected by selecting an appropriate angle G of the fold-lines, particularly the initial fold-line A.

As the sheet of material 125 is folded in the template 133 of Fig. 8, the resulting main body 102 may be generally flat, or squashed, in cross-section, with flared or angled-apart top 135 and bottom 136 edges, however examples wherein the main body 102 is substantially circular in cross-section may be constructed by rolling the sheet of material 125 from one corner, rather than folding it, to form a generally tubular main body 102. A single sheet of material 125 being rolled in such a way is shown in Fig. 9. In a similar way to the template of Fig. 8, the direction or angle in which the corner is rolled affects the angle F of the cone, i.e. the extent to which the main body 102 is conical. A larger angle produces a greater cone angle F.

As shown in Fig. 9, while the sheet of material 125 is being rolled, the ingredient 105 may be inserted, either loose or in a capsule 116, at the end of the cone which has the greatest diameter. In examples where the ingredient 105 is provided in a conical or cylindrical capsule 116, one end of the sheet of material 125 may be rolled around the circumference of the capsule 116. Although a generally conical capsule 116, or more specifically a truncated conical or frustoconical capsule 116, is provided in the example shown in Fig. 9 and a generally cylindrical capsule 116 is provided in the example shown in Fig. 5, any other suitable shape of capsule 116 is envisaged, including flexible capsules 116 adapted to conform to the shape of the walls of the internal chamber 106.

The sheet of material 125 may be liquid-disintegratable such that it is configured or adapted to disintegrate upon contact with a particular liquid, or it may be soluble in a particular liquid. In particular, the material 125 may be configured or adapted to disintegrate upon contact with water and thereby be water-disintegratable or it may be configured or adapted to be soluble in water and thereby be water-soluble. Examples wherein only a portion of the material 125 is water-disintegratable or water-soluble are also envisaged. The main body 102 comprises water-disintegratable or water-soluble material 125, both the ingredient dispensing portion 104 and the stirrer portion 103 are water-disintegratable or water-soluble.

Once rolled or folded into the appropriate shape, one or both of the ends of the ingredient dispenser 101 may be cut, clipped or otherwise shaped to form a flat edge, such as the edge 124 and edge 137 of the ingredient dispenser shown in Fig. 5, rather than an angled edge. Alternatively, the sheet of material 125 may be shaped such that, when rolled or folded, the ends are already flat, i.e. substantially perpendicular to the longitudinal axis of the elongate main body 102.

As the corner X of the material 125 is folded or rolled in an angled direction, generally inwards towards the centre of the sheet of material 125, the material 125 of the main body 102 of examples constructed from a single sheet of folded or rolled material 125 form a generally spiralled outer surface 138 or wall at both the ends of the main body 102, as can be seen in Fig. 10. Due to the shape of the sheet of material 125 and due to the angle G at which it is folded or rolled, the angles of the edges of the spirals 138 towards the proximal end 124 of the ingredient dispenser 101 are different to those towards the distal end 111, although examples wherein they are the same are also envisaged. As can be seen, the angles of the spiralled edges 138 on each side are substantially parallel when folded, or that they have the substantially the same helix angle G when rolled, as each other, however, as this is an artefact of the shape of the sheet of material 125, the helix angles G of the ingredient dispensing portion 104 and of the stirrer portion 103 can be varied and examples wherein the angles of the edges 138 on the same side of the main body 102 (i.e. either the ingredient dispensing portion 104 or the stirrer portion 103) differ from one another are also envisaged. As can also be seen, the spacing between the edges of the spirals 138 on the same side of the main body generally decreases towards the ends of the main body. As can also be appreciated, this is also a result of the shape of the sheet of material 125 and the angle G at which it is folded or rolled and, as such, examples wherein the spacing between the edges is substantially equal are also envisaged.

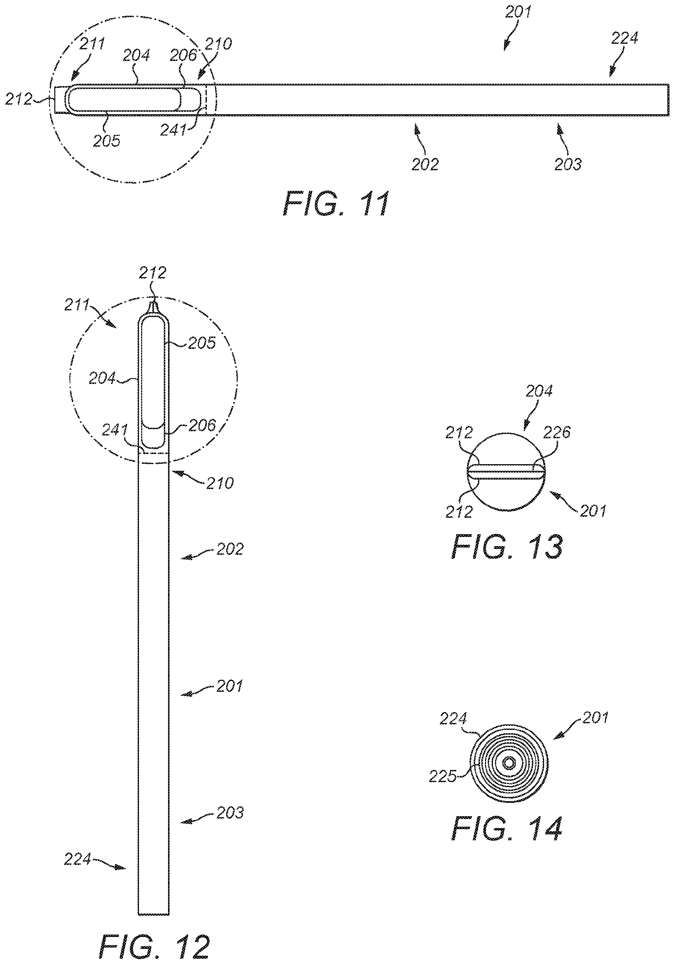

The spiralling of the material 125 of the main body provides that the number of layers of material 125 which comprise the wall of the distal end 111 of the ingredient dispensing portion 104 increases in a step-wise or piecemeal fashion along the length of the main body 102 towards the proximal end of the ingredient dispensing portion 104 or towards the stirrer portion 103. When the material 125 of the ingredient dispensing portion 104 is liquid-disintegratable or liquid-soluble (for example water-disintegratable or water-soluble), the provision of additional layers of material 125 towards the proximal end 110 of the ingredient dispensing portion 104 results in a reduced rate of disintegration or dissolving of that section in use. In this way, the rate of disintegration or dissolving of the main body 102 decreases away in a step-wise fashion from its distal end 111, such that the main body 102 becomes incrementally more resilient or resistant to disintegration or dissolving along its length, away from the distal end 111 and towards its centre. Thus, in use, the length of the main body 102 of the ingredient dispenser 101 disintegrates or dissolves from its tip 111 towards its centre in stages, according to the number of layers of material 125 which make up the wall of the main body at that particular section of the main body 102. Therefore, in examples wherein the ingredient 105 comprises a substantially solid block, or otherwise does not readily pour from the ingredient dispenser 101 and can instead be supported by the walls of the main body 102 through the transmission of shear forces into the ingredient 105, the quantity of ingredient 105 added to the liquid can be selected according to the extent to which the ingredient dispensing portion 104 is dipped into the liquid. Similarly, because the diameter of the main body 102 (and in particular of the ingredient dispensing portion 104) increases away from its distal end 111, in examples wherein the ingredient 105 is liquid or comprises loose granules, a powder or is otherwise unable to support shear stresses, the rate at which the ingredient 105 is dispensed into the liquid can be selected by the user according to the depth to, and length of time that, the ingredient dispensing portion 104 is submerged in or otherwise exposed to the liquid. An ingredient dispenser 201 according to a third embodiment of the present invention is shown in Fig. 11. The ingredient dispenser 201 of the third embodiment is substantially identical to that of the second embodiment with the exception that, rather than the main body 202 being substantially conical in shape as it is in the second embodiment, it is instead substantially cylindrical such that the outer diameter of the main body 202 of the ingredient dispenser 201 is substantially constant along its length.

In certain examples of the ingredient dispenser 201 of the third embodiment, the main body 202 may be substantially tubular and, as such, the internal compartment may extend substantially along the entire length, or in some examples the majority of the length, of the main body 202. In such examples both the ingredient dispensing portion 204 and the stirrer portion 203 may comprise the internal compartment 206 such that the internal compartment extends underneath the both the ingredient dispensing portion 204 and also the stirrer portion 203 of the main body 202. An advantage of ingredient dispensers 201 according to the third embodiment is that a greater volume of the internal compartment may be provided and therefore a greater volume of ingredient may be dispensed for a given size of ingredient dispenser 201, for example compared to ingredient dispensers 1; 101 according to the first and second embodiment.

Tubular ingredient dispensers according to the third embodiment comprising an internal compartment 206 which extends substantially or generally the majority or entirety of the length of the main body 202 may be constructed in a similar fashion to those of the second embodiment in that they may be rolled from one or more sheets of material 225. Where the ingredient dispenser is rolled from a single sheet or material 225, the ingredient dispenser can be formed by rolling the single sheet of material 225 in a similar fashion to that shown in Fig. 8, but instead of the sheet being rolled from one corner and at an angle as shown by arrow E, the sheet of material 225 can be rolled starting from one edge of the sheet and in a direction which is generally or substantially perpendicular to that edge to thereby form a tube or tubular main body. In a similar way to that shown in Fig. 9, ingredient 205 may be provided on the sheet of material 225, for example loose or in a capsule 216, and the sheet of material 225 may be rolled around the ingredient 205.

When rolled in this way from a substantially square, rectangular or other such quadrilateral in shape sheet of material, the number of layers of material comprising the external wall of the ingredient dispenser 201 is the same along the entire length of the ingredient dispenser 201. Alternatively, examples wherein the number of layers of material comprising the external wall varies along the length of the main body 202 may be constructed from a sheet of material 225 of a different shape, e.g. an L-shape, (for example, areas may be removed from the sheet of material where it is desired that fewer layers are required). Alternatively still, the main body 202 of ingredient dispensers according to the third embodiment 201 may be constructed by rolling a single sheet of material 225 at an angle such that the ingredient dispenser has a "wrap" appearance, such as that shown in Fig. 10, wherein the number of layers of material vary along the length of the main body 202.

In order to maintain the shape of the ingredient dispenser 201, the material may be adhered together in the same or similar way to that of the first and second embodiments. In the example of Fig. 11, a steam-pressed seal is applied to the material 225 of the main body 202 so as to adhere the end of the sheet of material 225 to the rolled body so as to prevent the main body from unrolling. As with all of the other embodiments, any other suitable means of adhesion may be used, for example adhesives, including water-soluble adhesives and edible adhesives.

Although in some examples of the third embodiment, the internal chamber 206 extends along the majority of the length of the main body 202, examples are envisaged wherein the internal chamber 206 extends any distance from the distal end 211. For example, Fig. 11 shows one example wherein the internal chamber 206 extends part-way along the length of the main body 202 and, in this example, the internal chamber 206 is confined to the ingredient dispensing portion 204 and does not extend into the stirrer portion 203. In all examples of all of the embodiments of the present invention, the internal compartment 206 may be substantially cylindrical.

In the same way as that of the second embodiment, once ingredient has been provided in the internal compartment 206, the internal compartment 206 is closed by pressing, or pinching, together the distal end of the ingredient dispensing portion 204 from substantially diametrically opposed sides, thereby forming two generally opposed and contacting tabs 212.

The tabs 212 may be seen in Fig. 13 which shows an end view of the distal portion of the ingredient dispenser 201, looking down the length of the main body 202 towards the proximal end of the main body 202 (the distal end of the ingredient dispenser 201 is the same end as the distal end of the main body 202 and of the ingredient dispensing portion 204 and similarly, the proximal end of the ingredient dispenser 201 is the same end as the proximal end of the main body 202 and of the stirrer portion 203). The tabs may then be adhered together to securely seal the internal compartment 206. Although any suitable means of adhesion may be used, including those discussed with respect to the other embodiments of the present invention, in the example of Fig. 11, the tabs 212 are steam-pressed together to thereby form a seal which resists the opening of the internal compartment from the distal end of the ingredient dispensing portion 204 until use.

A view of the tip of the proximal end of the stirrer portion 203, looking along the length of the main body 202, towards the distal end of the main body 202, is shown in Fig. 14 in which the layers of material can be seen. In examples wherein the main body 202 has been constructed from rolling a single sheet of material 225, the tip of the proximal end of the stirrer portion 203 would appear spiralled due to the rolling of the material 225 upon itself, however in Fig. 14, the material 225 is shown in layers and so the main body 202 of the example shown has been constructed from several sheets of material 225, each sheet being used to construct a single layer of the main body 202. In examples of this embodiment, and all of the other embodiments of the present invention, which have been constructed from different layers of material 225, the material 225 of at least one layer may be different to the material of one or more other layers such that the properties of each layer may be selected by selecting an appropriate material for that layer, for example the rate at which a particular layer disintegrates or dissolves may be predetermined or selected according to the material used for that layer.

In all of the embodiments of the present invention, a portion, for example a localised portion, of the main body 202 may be configured to disintegrate or dissolve faster than other, e.g. adjacent, portions of the main body 202. As such, one or more places or areas of the external surface of the main body 202 may be made thinner, for example they may comprise fewer layers of material or they may be otherwise structurally weakened so as to produce an area of the external surface which is susceptible to dissolve or disintegrate faster than others areas of the external surface.

In particular, the external surface may comprise a perforation or perforated line which may serve as a separation enhancing means to predispose the main body to separate along the perforation or perforated line. Such a separation enhancing means may act as a fail line to ensure that ingredient dispenser fails at a particular point, or predetermined location, along the length of the main body to ensure a clean separation of a portion of the main body (e.g. the ingredient dispensing portion) from the remainder of the main body (e.g. the stirrer portion).

In particular, such a separation enhancing means (or separation facilitating means) may be provided as a circumferential perforation, extending circumferentially around the external surface of the main body, as shown by perforated line 241 in Fig. 11 and Fig. 12. As mentioned, any of the embodiments of the present invention may comprise such a perforated line or any other such suitable separation enhancing or facilitating means.

The separation facilitating means (e.g. perforated line 241) may be provided at any point along the length of the main body 202, for example part way along the length of the main body 202. In the example of Fig. 11, the separation facilitating means 241 is provided between the proximal end of the internal compartment and the stirrer portion such that the entire ingredient dispensing portion 204 is configured to separate cleanly from the main body 202 and the stirrer portion 203, thereby ensuring that the entire contents of the internal compartment 206 is released into the liquid, while also ensuring that the stirrer portion remains substantially intact. Examples wherein the separation facilitating means 241 is provided part-way along the internal compartment 206, such that after separation a portion of the ingredient dispensing portion 204 and the internal compartment 206 remain attached to the main body 202, are also envisaged.

The separation facilitating means 241 also ensures a clean separation of the main body 202 such that the edge of the end of the stirrer portion 203, once the ingredient dispensing portion 204 has fully separated, is not "ragged" but is instead "clean", thereby improving the aesthetics of the stirrer portion 203 such that the stirrer portion 203 may be more appealing to the user such that they may be more likely to use the stirrer portion 203 to stir the liquid once the ingredient has been dispensed.

In order to increase the resilience of the stirrer portion 203 of the main body 202 to the liquid, a barrier means such as a coating, for example a beeswax coating, may be applied to at least a portion or the entirety of the stirrer portion 203. In some examples, the barrier means, or protective coating, extends all the way around the circumferential direction of the stirrer portion and extends from the proximal end of the stirrer portion 203 partway towards the distal end of the main body 202. In the example shown in Fig. 11, the protective coating extends from the proximal tip of the main body 202 along the entire extent of the stirrer portion up to, or generally or substantially up to, the separation facilitating means 241.

As ingredient dispensers 201 according to the third embodiment are substantially the same as those of the second embodiment, with the exception that the main body 202 of ingredient dispensers 201 of the third embodiment are generally or substantially cylindrical whereas the main body 102 of ingredient dispensers 101 of the second embodiment are generally or substantially conical, the adaptations and optional features of ingredient dispensers according to the second embodiment 101 are equally applicable to ingredient dispensers according to the third embodiment 201. For example, ingredient dispensers according to the third embodiment may comprise seaweed or rice paper.

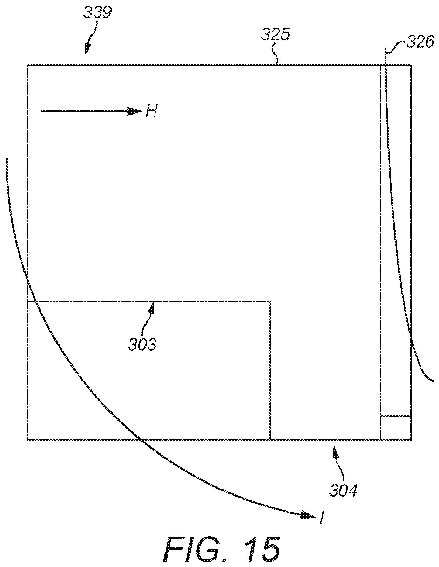

Fig. 15 shows a template for constructing an ingredient dispenser according to a fourth embodiment of the present invention from a single sheet of material 325 by rolling the single sheet of material 325. The sheet of material 325 is rolled in the directions indicated by arrows H and I and a steam press line 326 is indicated by arcuate line F. The steam-press line is the line that the steam-press seal follows to form the seal at the distal end 311 of the ingredient dispensing portion 304. Ingredient dispensers 301 constructed according to the template of Fig. 15 are advantageous over those constructed according to the template of Fig. 9 as a reduced area of material is required such that the volume of the material 325 is comparable or substantially equal to the volume of the ingredient 305 in the internal compartment 306 of the ingredient dispensing portion 304.

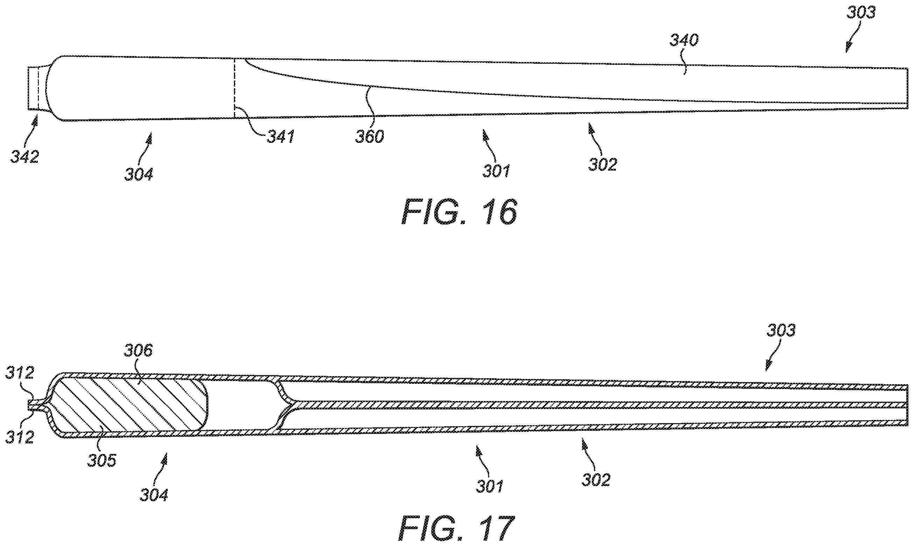

A side view of an ingredient dispenser 301 according to a fourth embodiment of the present invention and, in the example shown, constructed from the template 339 of Fig. 15, is shown in Fig. 16. Although the example of Fig. 16 is constructed from the template 339 of Fig. 15, ingredient dispensers 301 of the fourth embodiment are not limited to being constructed from the template of Fig. 15, or even from a single sheet of material, but can instead be constructed or manufactured in any suitable way.

As can be seen in Fig. 16, ingredient dispensers 301 according to the fourth embodiment are similar to those of the second embodiment 101 in that they are substantially tapered in shape along their length. As such, the distal end of the ingredient dispenser is thicker (has a greater diameter) than any other portion of the main body 302 such that the main body 302 tapers inwardly along its length towards the proximal end of the main body 302 and all the way to the proximal tip of the main body 302. A perforation line 341 (an example of a separation facilitating means) which extends around the entire circumference of the main body 302 is provided part way from the distal end of the main body 302 and marks the junction between the ingredient dispensing portion 304 and the stirrer portion 303 of the main body 302. Thus, the ingredient dispensing portion 304 is that part of the main body 302 which is on the distal side (in Fig. 16, to the left hand side) of the circumferential perforation line 341 and the stirrer portion 303 is that part of the main body 302 which is on the proximal side of the main body 302.

The perforation line is a perforation in the material 325 and may only be provided on the external surface of the main body 302 or, for example in examples where the wall of the main body comprises layers of material, the perforation line may be provided on each successive layer through the wall thickness and may be aligned such that they are provided substantially directly underneath each other to ensure a clean separation of the ingredient dispensing portion 304 from the stirrer portion 303 along a single plane. As with all of the embodiments of the present invention, the separation facilitating means (the perforated line 341) is an entirely optional feature and examples which do not comprise such a means do not require any modification to accommodate or enable the absence of this feature.

The ingredient dispensing portion 304 is substantially conical as it tapers towards the proximal end of the main body 302 and has a substantially circular cross-section. The wall of the stirrer portion 303 is substantially pinched together on one side. The pinched region has been formed by steam-pressing in that a steam-press has been applied along the length of the stirrer portion, to the upper side of arcuate line 360, such that the portion of the stirrer portion 303 which is substantially pinched together forms a stream-pressed region 340. As the external wall of the stirrer portion is pinched together such that it substantially collapses, an edge 342 is provided (formed by the pressing or pinching together of the external wall) which extends along the length of the stream-pressed region 340. Applying a steam press to the material 325 ensures that the stirrer-portion retains its shape. The shape of the stirrer portion 303 of the fourth embodiment 301, as shown in Fig. 16, is particularly advantageous as it provides a comfortable grip for the user, while also providing a particularly stiffer stirrer portion 303 with improved resilience, for example to the solvent action of the liquid.

The main body 302 comprises an internal chamber 306 which comprises ingredient 305, as can be seen in the cross-sectional plan view of Fig. 17. In the example of Fig. 17, the internal chamber 306 extends from the tip of the distal end of the main body 302 (that is, the distal end of the ingredient dispensing portion 304), along the entire length of the ingredient dispensing portion 304 and extends into the stirrer chamber. Due to the particular shape of the stirrer portion 303, the cross-sectional area of the internal chamber 306 within the stirrer portion 303 reduces towards the proximal end, as can be seen in Fig. 16, such that the internal chamber ends substantially towards the proximal tip of the stirrer portion (although it is sealed at that end such that ingredient is unable to escape). Although in this example the internal chamber 306 extends substantially the entire length of the main body 302, it may extend any distance from the distal end, for example it may extend only part way along the ingredient dispensing portion 304, or it may extend all the way past the flavourant dispensing portion and part-way into the stirrer portion 303.
In a similar way to the second and third embodiments, the distal end of the internal chamber 306 is sealed by the provision of two generally radially-extending opposed tabs 312 which are formed by pressing and collapsing the external walls of the distal tip of the main body 302 from generally diametrically opposed directions. The opposed tabs 312 are sealed together by a steam-press seal 342 which extends along the length of the tabs 312 (in the radial direction) to thereby close the internal chamber 306 and prevent its contents (i.e. the ingredient 305) from escaping that end of the ingredient dispenser 301 until during use.

Fig. 17 is a plan cross-sectional view of the example of Fig. 16, taken approximately along the midline of the ingredient dispenser 301 and looking upwards, towards edge 342, illustrating the internal compartment 306 and ingredient 305 contained within the ingredient dispenser 301 and showing that the internal compartment 306 extends past the ingredient dispensing portion 304 and into the stirrer portion 303.

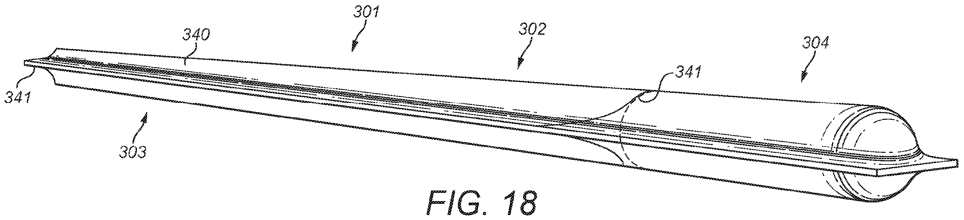

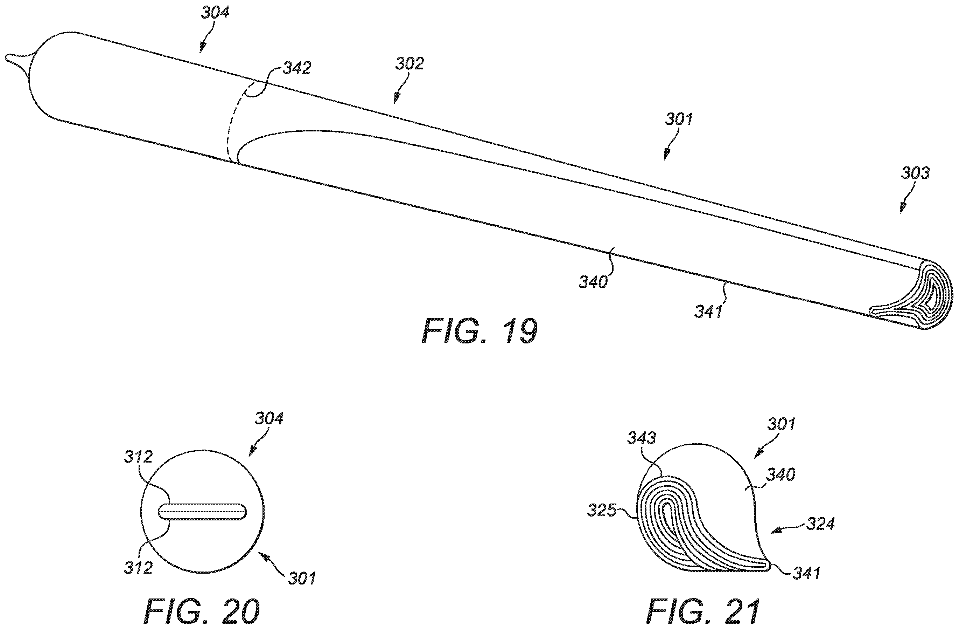

Perspective views of the example of Fig. 16 are shown in Figs. 18 and 19 from which the steam-pressed region 340 can be clearly seen, as well as the circumferential perforations 342.

The distal and proximal tips of the ingredient dispenser 301 of the fourth embodiment are shown in Figs. 20 and 21 respectively.

In Fig. 20, the sealing tabs 312, configured to open when the ingredient dispensing portion is exposed to a liquid, are shown pressed and sealed together. In this example, the lengths of the sealing tabs (i.e. in the radial direction) are shorter than the diameter of the conical portion of the ingredient dispensing portion 304 such that the tabs do not extend all the way across the diameter, but instead only extend (from the centre) partway across.

The proximal end of the stirrer portion is shown in close-up in the end view of Fig. 21, wherein it can be seen that the external wall of the main body (shown as comprising multiple layers of material 325) has been collapsed and buckled inwardly so as to form a depressed or collapsed region 340 (the steam-pressed region 340). The longitudinal edge 341 of the collapsed region 340 can also be seen. Where the material 325 has been collapsed, as well producing edge 341, the material has been "folded back" on itself to form a rounder longitudinal surface 343 (rounder than the relatively sharp longitudinal edge 341) arranged on generally the opposite side of the ingredient dispenser 301 to that of the edge 341, such that one side of the stirrer portion 303 comprises a generally round and smooth surface 343 which may facilitate with holding the ingredient dispenser 301.

Although the example of the fourth embodiment shown in Figs 18 to 21 in constructed from a single, rolled sheet of material, examples of all of the embodiments of the present invention being constructed from multiple layers of separate sheets of material are also envisaged. Additionally, examples wherein the external wall of at least a portion of, or in some examples substantially the entirety of, the main body comprise a single layer of material are envisaged.

Area 340 of the ingredient dispensing portion 304 of the main body 302 is steam pressed to seal the ingredient dispensing portion 304 and in order to assist with maintaining the rolled or folded configuration of the ingredient dispenser 301.

The template 339 of Fig. 15 is particularly advantageous over the template of Fig. 8 as the quantity of material 125 used is reduced while still retaining the necessary stiffness and resilience to the liquid, thereby reducing manufacturing costs. In examples wherein the entire ingredient dispenser 301 is not dissolved within the liquid, for example as a result of the volume of liquid to be flavoured being too small, ingredient dispensers 301 constructed from the template of Fig. 15 provide the additional advantage of reducing the quantity of residue left at the bottom of the container after the ingredient dispenser 301 has been used.

In a similar way to the first, second and third embodiments, the material 325 of the main body 302 of the fourth embodiment may comprise a foodstuff, such as seaweed. For example, the substantially the entire main body 302 may be constructed from a single sheet of food stuff, such as seaweed, rice paper or a sugar sheet.

As in the case of ingredient dispensers 1; 101; 201; 301 according to the first, second and third embodiments, the main body 302 of ingredient dispensers 301 according to the fourth embodiment may be constructed from a single sheet of material 325, wherein the material 325 itself comprises an ingredient 5 or foodstuff, for example seaweed, or it may have ingredient additives dispersed throughout the thickness of the material 325, or even have one or more ingredients 305 added to the internal or external surface or wall of at least a portion, or even the entirety, of the main body 302. For example, granules of ingredient 305 may be adhered to the internal or external surface or wall of the material 325 of a portion of the main body 302, or a 331 layer of ingredient 305 may additionally or alternatively be provided. For example, a layer 331 of beeswax or a sugar solution may be provided on the external surface of the main body 302, for example the stirrer portion 303. Such a layer 331 could be applied by dipping in a liquid of the ingredient 305 the portion of the main body 302 to be coated, which would then set when the portion of the main body 302 is removed from the liquid ingredient 305 to form a external coating or layer 331 of ingredient 305, thereby forming a substantially protective coating or layer.

As with all of the embodiments of the present invention, in order to vary or control the rate at which the ingredient dispenser 301, or a portion thereof with respect to another portion, disintegrates or dissolves in the liquid, a resilient layer 331 may be added to the external surface or wall of at least a portion or substantially the entirety of the main body 302, for example the ingredient dispensing portion 304 and/or the stirrer portion 303. The ingredient layer 331 may also sever as the resilient layer 331.

Such a resilient or protective layer 331 may control or limit the exposure of the liquid disintegratable or soluble material 325 underneath to the liquid and it may do so by providing a resilient barrier 331 which resists the solvent action of the liquid and which may have a disintegration rate or dissolving rate which is lower than that of the liquid disintegratable or soluble material 325 of at least a portion of the main body 302.

Additionally, such a layer 331 assists in maintaining the integrity of the ingredient dispenser 301, as such, it is particularly advantageous when the stirrer portion 303 is provided with such a layer 331 because such a stirrer portion is then better able to withstand the liquid and to retain its integrity and shape for longer, thereby enabling the stirrer portion 303 to be exposed to the liquid for a longer duration so that it can continue to be used for stirring the liquid for a longer period of time, and in examples where the ingredient dispensing portion 304 does not comprise such a layer 331, the stirrer portion 303 may continue to be used to stir the liquid even after the ingredient dispensing portion 304 has completely or substantially disintegrated or dissolved.

The resilient layer 331 may also serve as a stiffening means and, as such, may provide increased stiffness of the portion of the main body 302 to which it is applied, particularly the stirring portion 303, to prevent it from buckling or otherwise deforming, both while in storage and also while in use.

It has been found that a layer of beeswax is a particularly advantageous example of such a resilient layer 331.

Additionally or alternatively to the provision of an internal compartment 306 containing ingredient 305, examples of the fourth embodiment, as well as the first, second and third embodiments, comprising ingredient 305 dispersed through the material 325 of a portion, or substantially all, of the main body 302 as also envisaged.

Also envisaged are examples comprising ingredient 305 adhered to an external or internal surface or wall of a portion, or substantially all, of the main body 302. For example, the walls of the internal chamber 306 may comprise ingredient 305, such as sugar, adhered to them.

Although not shown in the figures, the ingredient dispenser 301 according to any of the embodiments of the present invention may comprise markings on one or more of its external surfaces. The markings may be designed to indicate the source, i.e. manufacturer, of the ingredient dispenser 301, the type or flavour of ingredient 305 dispensed, the quantity of ingredient 305 dispensed or contained within the internal compartment 306 of the ingredient dispenser 301, the nutritional content of the ingredient dispenser 301 and/or of the ingredient 305, or other any other such information. The markings may also indicate how the ingredient dispenser is intended to be used and as such may comprise usage instructions and they may specifically indicate which portion of the main body 302 should be held by the user and which portion should be applied to the liquid or beverage to be flavoured. Any suitable means could be used to apply such markings, for example they could be printed onto the material 325 or they could be sprayed. Alternatively or additionally, the markings could be embossed or debossed into the surface of the material 325, particularly the outer or external surface of the main body 302.

In examples where the ingredient dispenser 301 comprises a marking on one or more of its external or outer surfaces to demark the extent of the stirrer portion with respect to the length of the main body 302, and the outer surface of the stirrer portion 303 comprises a resilient layer 331, for example beeswax, the resilient layer 331 may cover substantially the entirety of the outer surface of the stirrer portion 303, up to the marking indicating the extent of the stirrer portion 303.

The ingredient dispenser 1; 101; 201; 301 of all four embodiments may be configured to dispense a certain pre-determined quantity of ingredient 5; 105; 205; 305 which may be of a standardised weight or volume, for example one sugar lump, one teaspoon or a certain integer number of millilitres or grams. As such, the ingredient dispenser 1; 101; 201; 301 and/or the internal chamber 6; 106; 206; 306 may be sized according to the volume or mass of ingredient 5; 105; 205; 305 to be dispensed. A preferred mass of ingredient 5; 105; 205; 305 dispensed is about 1 to 3 grams (for example 1, 2 or 3 grams) and as such the internal compartment 6; 106; 206; 306 may be sized according to the mass or volume of ingredient 5; 105; 205; 305 to be contained within the internal compartment 6; 106; 206; 207 and therefore dispensed by the ingredient dispenser 1; 101; 201; 301.

Examples lacking an internal chamber 6; 106; 206; 306 for containing an ingredient 5; 105; 205; 305 are also envisaged wherein the ingredient 5; 105; 205; 305 is provided by, e.g. within, the material 25; 125; 225; 325 itself of at least a portion of the main body 2; 102; 202; 302. In such examples, ingredient 5; 105; 205; 305 may be provided to the liquid as the material 25; 125; 225; 325 itself may be a foodstuff, such as seaweed, or ingredient 5; 105; 205; 305 may be dispersed throughout the material 25; 125; 225; 325 itself or provided on an internal or external surface or wall thereof. Where ingredient 5; 105; 205; 305 is provided on or in the material 25; 125; 225; 325 itself, the concentration of the ingredient 5; 105; 205; 305 may vary at certain locations, for example the concentration of the ingredient 5; 105; 205; 305 may increase along the length of the ingredient dispenser 1; 101; 201; 301, away from the distal, ingredient dispensing end 11; 111; 211; 311 of the main body 2; 102; 202; 302. Additionally, examples wherein different layers of the wall of a portion of the main body 2; 102; 202; 302, for example the stirrer portion 3; 103; 203; 303 or the ingredient dispensing portion 4; 104; 204; 304, comprises different ingredients 5; 105; 205; 305, in an onion-skin fashion, are also envisaged such that the overall flavour of the liquid to be flavoured can be altered or enhanced according to the number of layers, and extent of each layer, of material 25; 125; 225; 325 the user allows to disintegrate or dissolve into the liquid before removing the ingredient dispenser 1; 101; 201; 301 removed from the liquid.

Although the embodiments discussed above are substantially straight in length, examples wherein a portion of the main body 2; 102; 202; 302, for example one or both of the ends of the main body 2; 102; 202; 302, are substantially curved or arcuate, or twisted about the longitudinal axis, are also envisaged. Such examples may resemble a hockey-stick or a quill or feather.

Furthermore, although the main body 2; 102; 202; 302 of the embodiments described above are constructed from a single sheet of material 25; 125; 225; 325, examples wherein certain portions of the ingredient dispenser 1; 101; 201; 301 are constructed from different sheets of material 25; 125; 225; 325 are also envisaged. For example, examples wherein the ingredient dispensing portion 4; 104; 204; 304 is constructed from one sheet and where the stirrer portion 3; 103; 203; 303 is manufactured from another sheet and where the two sheets are adhered or otherwise joined together are envisaged. Thus, material 25; 125; 225; 325 having different rates of disintegration may be used, for example the ingredient dispensing portion 4; 104; 204; 304 may be constructed from a material which readily disintegrates in water, whereas the stirrer portion 3; 103; 203; 303 may be constructed from, or may comprise, a material which is more resilient, for example which may be less water-soluble/water-disintegratable or which may otherwise be better able to withstand exposure to water or other liquids for longer.

The ingredient dispensers of all four the embodiment of the present invention may also dispense, or be configured to dispense, flavourants or flavourings and as such they may also be flavourant dispensers or flavouring dispensers. For example, the ingredient 5; 105; 205; 305 which may be provided in the internal compartment 6; 106; 206; 306 may be or may comprise one or more flavourants or flavourings.

It is envisaged that the person skilled in the art may make various changes to the embodiments specifically described above without departing from the scope of the invention.

## Claims

1. An ingredient dispenser (1; 101; 201; 301) for dispensing ingredient into a liquid, the ingredient dispenser comprising an elongate main body (2; 102; 202; 302) comprising an ingredient dispensing portion (4; 104; 204; 304) at a distal end (11) of the elongate main body, wherein the ingredient dispensing portion is configured to release ingredient (5; 105; 205; 305) from the ingredient dispenser, and a stirrer portion (3; 103; 203; 303) at a proximal end (24) of the elongate main body, wherein the stirrer portion is configured to enable a liquid to be stirred by the stirrer portion, and wherein the main body is configured to at least partially disintegrate upon contact with a liquid including water; **characterised in that**:
both the stirrer portion and the ingredient dispensing portion are configured to disintegrate in a liquid including water.

2. An ingredient dispenser (1; 101; 201; 301) for dispensing ingredient into a liquid, the ingredient dispenser comprising an elongate main body (2; 102; 202; 302) comprising an ingredient dispensing portion (4; 104; 204; 304) at a distal end (11) of the elongate main body, wherein the ingredient dispensing portion is configured to release ingredient (5; 105; 205; 305) from the ingredient dispenser, and a stirrer portion (3, 103; 203; 303) at a proximal end (24) of the elongate main body, wherein the stirrer portion is configured to enable a liquid to be stirred by the stirrer portion, and wherein the main body is configured to at least partially dissolve upon contact with a liquid including water; **characterised in that**:
both the stirrer portion and the ingredient dispensing portion are configured to dissolve in a liquid including water.

3. The ingredient dispenser (1; 101; 201; 301) of Claim 1 or 2, wherein the ingredient dispenser comprises ingredient and, when the main body (2; 102; 202; 302) is configured to at least partially disintegrate upon contact with a liquid including water, the main body is configured to enable the ingredient to be released from the ingredient dispenser upon disintegration of the main body, and, when the main body is configured to at least partially dissolve upon contact with a liquid including water, the main body is configured to enable the ingredient to be released from the ingredient dispenser upon contact with a liquid including water.

4. The ingredient dispenser (1; 101; 201; 301) of Claim 3, wherein substantially the entirety of the main body (2; 102; 202; 302) is configured to disintegrate or dissolve in a liquid including water.

5. The ingredient dispenser (1; 101; 201; 301) of any one of Claims 1 to 4, wherein the ingredient dispensing portion (4; 104; 204; 304) comprises an internal chamber (6; 106; 206; 306) configured to contain, or containing, a quantity of ingredient.

6. The ingredient dispenser (1; 101; 201; 301) of any one of Claims 1 to 5, wherein at least a portion of the main body (2; 102; 202; 302) comprises an external wall comprising at least one layer of water-soluble or water-disintegratable material, and optionally the portion of the main body comprising the external wall comprises a wall of the ingredient dispensing portion (4; 104; 204; 304), and optionally wherein the portion of the main body comprising the external wall comprises the stirrer portion (3, 103; 203; 303).

7. The ingredient dispenser (1; 101; 201; 301) of Claim 6, wherein the portion of the main body (2; 102; 202; 302) comprising the external wall comprises substantially the entirety of the main body.

8. The ingredient dispenser (1; 101; 201; 301) of Claim 6 or 7, wherein the portion of the external wall comprises a single sheet (25; 125; 225; 325) of water-soluble or water-disintegratable material, optionally the single sheet is a single sheet of rolled water-soluble or water-disintegratable material.

9. The ingredient dispenser (1; 101; 201; 301) of any one of Claims 6 to 8, wherein the number of layers of the water-soluble or water-disintegratable material of the portion of the external wall varies along the length of the external wall.

10. The ingredient dispenser (1; 101; 201; 301) of any one of Claims 6 to 9, wherein adjacent portions of the material are adhered together by adhesive, optionally wherein the adhesive is water-soluble.

11. The ingredient dispenser (1; 101; 201; 301) of any one of Claims 6 to 10, when dependent on Claim 5, wherein the internal chamber (6; 106; 206; 306) is formed by the folding together of a portion of the material, optionally wherein the folded portions are steam-pressed together.

12. The ingredient dispenser (1; 101; 201; 301) of any one of Claims 8 to 11, when dependent on Claim 5, wherein the single sheet (25; 125; 225; 325) of rolled material comprises the ingredient dispensing portion (4; 104; 204; 304), and optionally wherein the single sheet of rolled material comprises the stirrer portion (3; 103; 203; 303).

13. The ingredient dispenser (1; 101; 201; 301) of any one of Claims 8 to 12, wherein the single sheet (25; 125; 225; 325) of rolled material comprises substantially the entirety of the main body (2; 102; 202; 302).

14. The ingredient dispenser (1; 101; 201; 301) of any one of Claims 6 to 13, wherein the portion of the external wall comprises beeswax, optionally wherein the portion of the external wall that comprises beeswax comprises the stirrer portion (3; 103; 203; 303), further optionally wherein the beeswax is a layer of beeswax applied to the external surface of the portion of the external wall.

15. The ingredient dispenser (1; 101; 201; 301) of any one of Claims 6 to 14, wherein the wall of the ingredient dispensing portion (4; 104; 204; 304) comprises a single layer of the water-soluble or water-disintegratable material and wherein an external wall of the stirrer portion (3; 103; 203; 303) comprises at least two layers of the water-soluble or water-disintegratable material.

## Patentansprüche

1. Zutatenspender (1; 101; 201; 301) zum Abgeben einer Zutat in eine Flüssigkeit, wobei der Zutatenspender einen länglichen Hauptkörper (2; 102; 202; 302), der einen Zutatenabgabeabschnitt (4; 104; 204; 304) an einem distalen Ende (11) des länglichen Hauptkörpers umfasst, wobei der Zutatenabgabeabschnitt dazu ausgelegt ist, eine Zutat (5; 105; 205; 305) aus dem Zutatenspender freizusetzen, und einen Rührerabschnitt (3; 103; 203; 303) an einem proximalen Ende (24) des länglichen Hauptkörpers umfasst, wobei der Rührerabschnitt dazu ausgelegt ist, zu ermöglichen, dass eine Flüssigkeit durch den Rührerabschnitt gerührt wird, und wobei der Hauptkörper dazu ausgelegt ist, bei Kontakt mit einer Flüssigkeit, die Wasser beinhaltet, zumindest teilweise zu zerfallen; **dadurch gekennzeichnet, dass**:
sowohl der Rührerabschnitt als auch der Zutatenabgabeabschnitt dazu ausgelegt sind, in einer Flüssigkeit, die Wasser beinhaltet, zu zerfallen.

2. Zutatenspender (1; 101; 201; 301) zum Abgeben einer Zutat in eine Flüssigkeit, wobei der Zutatenspender einen länglichen Hauptkörper (2; 102; 202; 302), der einen Zutatenabgabeabschnitt (4; 104; 204; 304) an einem distalen Ende (11) des länglichen Hauptkörpers umfasst, wobei der Zutatenabgabeabschnitt dazu ausgelegt ist, eine Zutat (5; 105; 205; 305) aus dem Zutatenspender freizugeben, und einen Rührerabschnitt (3, 103; 203; 303) an einem proximalen Ende (24) des länglichen Hauptkörpers umfasst, wobei der Rührerabschnitt dazu ausgelegt ist, zu ermöglichen, dass eine Flüssigkeit durch den Rührerabschnitt gerührt wird, und wobei der Hauptkörper dazu ausgelegt ist, sich bei Kontakt mit einer Flüssigkeit, die Wasser beinhaltet, zumindest teilweise aufzulösen; **dadurch gekennzeichnet, dass**:
sowohl der Rührerabschnitt als auch der Zutatenabgabeabschnitt dazu ausgelegt sind, sich in einer Flüssigkeit, die Wasser beinhaltet, aufzulösen.

3. Zutatenspender (1; 101; 201; 301) nach Anspruch 1 oder 2, wobei der Zutatenspender eine Zutat umfasst und, wenn der Hauptkörper (2; 102; 202; 302) dazu ausgelegt ist, sich bei Kontakt mit einer Flüssigkeit, die Wasser beinhaltet, zumindest teilweise aufzulösen, der Hauptkörper dazu ausgelegt ist zu ermöglichen, dass die Zutat bei Zerfall des Hauptkörpers aus dem Zutatenspender freigesetzt wird, und, wenn der Hauptkörper dazu ausgelegt ist, sich bei Kontakt mit einer Flüssigkeit, die Wasser beinhaltet, zumindest teilweise aufzulösen, der Hauptkörper dazu ausgelegt ist zu ermöglichen, dass die Zutat bei Kontakt mit einer Flüssigkeit, die Wasser beinhaltet, aus dem Zutatenspender freigesetzt wird.

4. Zutatenspender (1; 101; 201; 301) nach Anspruch 3, wobei im Wesentlichen die Gesamtheit des Hauptkörpers (2; 102; 202; 302) dazu ausgelegt ist, in einer Flüssigkeit, die Wasser beinhaltet, zu zerfallen oder sich aufzulösen.

5. Zutatenspender (1; 101; 201; 301) nach einem der Ansprüche 1 bis 4, wobei der Zutatenabgabeabschnitt (4; 104; 204; 304) eine innere Kammer (6; 106; 206; 306) umfasst, die dazu ausgelegt ist, dass sie eine Menge an Zutat enthält, oder die diese Menge enthält.

6. Zutatenspender (1; 101; 201; 301) nach einem der Ansprüche 1 bis 5, wobei mindestens ein Abschnitt des Hauptkörpers (2; 102; 202; 302) eine Außenwand umfasst, die mindestens eine Schicht aus wasserlöslichem oder in Wasser zerfallendem Material umfasst, und optional der Abschnitt des Hauptkörpers, der die Außenwand umfasst, eine Wand des Zutatenabgabeabschnitts (4; 104; 204; 304) umfasst, und wobei optional der Abschnitt des Hauptkörpers, der die Außenwand umfasst, den Rührerabschnitt (3, 103; 203; 303) umfasst.

7. Zutatenspender (1; 101; 201; 301) nach Anspruch 6, wobei der Abschnitt des Hauptkörpers (2; 102; 202; 302), der die Außenwand umfasst, im Wesentlichen die Gesamtheit des Hauptkörpers umfasst.

8. Zutatenspender (1; 101; 201; 301) nach Anspruch 6 oder 7, wobei der Abschnitt der Außenwand ein einzelnes Blatt (25; 125; 225; 325) aus wasserlöslichem oder in Wasser zerfallendem Material umfasst, wobei wahlweise das einzelne Blatt ein einzelnes Blatt aus gerolltem wasserlöslichem oder in Wasser zerfallendem Material ist.

9. Zutatenspender (1; 101; 201; 301) nach einem der Ansprüche 6 bis 8, wobei die Anzahl der Schichten des wasserlöslichen oder in Wasser zerfallenden Materials des Abschnitts der Außenwand entlang der Länge der Außenwand variiert.

10. Zutatenspender (1; 101; 201; 301) nach einem der Ansprüche 6 bis 9, wobei benachbarte Abschnitte des Materials durch Klebstoff miteinander verklebt sind, wobei der Klebstoff optional wasserlöslich ist.

11. Zutatenspender (1; 101; 201; 301) nach einem der Ansprüche 6 bis 10, wenn abhängig von Anspruch 5, wobei die innere Kammer (6; 106; 206; 306) durch Zusammenfalten eines Abschnitts des Materials gebildet wird, wobei optional die gefalteten Abschnitte zusammen dampfgepresst werden.

12. Zutatenspender (1; 101; 201; 301) nach einem der Ansprüche 8 bis 11, wenn abhängig von Anspruch 5, wobei das einzelne Blatt (25; 125; 225; 325) aus gerolltem Material den Zutatenabgabeabschnitt (4; 104; 204; 304) umfasst, und wobei optional das einzelne Blatt aus gerolltem Material den Rührerabschnitt (3; 103; 203; 303) umfasst.

13. Zutatenspender (1; 101; 201; 301) nach einem der Ansprüche 8 bis 12, wobei das einzelne Blatt (25; 125; 225; 325) aus gerolltem Material im Wesentlichen die Gesamtheit des Hauptkörpers (2; 102; 202; 302) umfasst.

14. Zutatenspender (1; 101; 201; 301) nach einem der Ansprüche 6 bis 13, wobei der Abschnitt der Außenwand Bienenwachs umfasst, wobei optional der Abschnitt der Außenwand, der Bienenwachs umfasst, den Rührerabschnitt (3; 103; 203; 303) umfasst, wobei ferner optional das Bienenwachs eine Bienenwachsschicht ist, die auf die Außenfläche des Abschnitts der Außenwand aufgebracht ist.

15. Zutatenspender (1; 101; 201; 301) nach einem der Ansprüche 6 bis 14, wobei die Wand des Zutatenabgabeabschnitts (4; 104; 204; 304) eine einzelne Schicht des wasserlöslichen oder in Wasser zerfallenden Materials umfasst, und wobei eine Außenwand des Rührerabschnitts (3; 103; 203; 303) mindestens zwei Schichten des wasserlöslichen oder in Wasser zerfallenden Materials umfasst.

## Revendications

1. Distributeur d'ingrédient (1 ; 101 ; 201 ; 301) permettant de distribuer un ingrédient dans un liquide, le distributeur d'ingrédient comprenant un corps principal allongé (2 ; 102 ; 202 ; 302) comprenant une partie de distribution d'ingrédient (4 ; 104 ; 204 ; 304) au niveau d'une extrémité distale (11) du corps principal allongé, la partie de distribution d'ingrédient étant configurée pour libérer l'ingrédient (5 ; 105 ; 205 ; 305) du distributeur d'ingrédient, et une partie d'agitation (3 ; 103 ; 203 ; 303) au niveau d'une extrémité proximale (24) du corps principal allongé, la partie d'agitation étant configurée pour permettre à un liquide d'être agité par la partie d'agitation, et le corps principal étant configuré pour se désintégrer au moins partiellement lors d'un contact avec un liquide comprenant de l'eau ;
**caractérisé en ce que** :
la partie d'agitation et la partie de distribution d'ingrédient sont toutes deux configurées pour se désintégrer dans un liquide comprenant de l'eau.

2. Distributeur d'ingrédient (1 ; 101 ; 201 ; 301) permettant de distribuer un ingrédient dans un liquide, le distributeur d'ingrédient comprenant un corps principal allongé (2 ; 102 ; 202 ; 302) comprenant une partie de distribution d'ingrédient (4 ; 104 ; 204 ; 304) au niveau d'une extrémité distale (11) du corps principal allongé, la partie de distribution des ingrédients étant configurée pour libérer un ingrédient (5 ; 105 ; 205 ; 305) du distributeur d'ingrédient, et une partie d'agitation (3, 103 ; 203 ; 303) au niveau d'une extrémité proximale (24) du corps principal allongé, la partie d'agitation étant configurée pour permettre à un liquide d'être agité par la partie d'agitation, et le corps principal étant configuré pour se dissoudre au moins partiellement lors d'un contact avec un liquide comprenant de l'eau ;
**caractérisé en ce que** :
la partie d'agitation et la partie de distribution d'ingrédient sont toutes deux configurées pour se dissoudre dans un liquide comprenant de l'eau.

3. Distributeur d'ingrédient (1 ; 101 ; 201 ; 301) selon la revendication 1 ou 2, dans lequel le distributeur d'ingrédient comprend un ingrédient et, lorsque le corps principal (2 ; 102 ; 202 ; 302) est configuré pour se désintégrer au moins partiellement lors d'un contact avec un liquide comprenant de l'eau, le corps principal est configuré pour permettre à l'ingrédient d'être libéré du distributeur d'ingrédient lors de la désintégration du corps principal et, lorsque le corps principal est configuré pour se dissoudre au moins partiellement lors d'un contact avec un liquide comprenant de l'eau, le corps principal est configuré pour permettre à l'ingrédient d'être libéré du distributeur d'ingrédient lors d'un contact avec un liquide comprenant de l'eau.

4. Distributeur d'ingrédient (1 ; 101 ; 201 ; 301) selon la revendication 3, dans lequel la quasi-totalité du corps principal (2 ; 102 ; 202 ; 302) est configurée pour se désintégrer ou se dissoudre dans un liquide comprenant de l'eau.

5. Distributeur d'ingrédient (1 ; 101 ; 201 ; 301) selon l'une quelconque des revendications 1 à 4, dans lequel la partie de distribution d'ingrédient (4 ; 104 ; 204 ; 304) comprend une chambre interne (6 ; 106 ; 206 ; 306) configurée pour contenir, ou contenant, une quantité d'ingrédient.

6. Distributeur d'ingrédient (1 ; 101 ; 201 ; 301) selon l'une quelconque des revendications 1 à 5, dans lequel au moins une partie du corps principal (2 ; 102 ; 202 ; 302) comprend une paroi externe comprenant au moins une couche de matériau hydrosoluble ou se désagrégeant dans l'eau, et éventuellement la partie du corps principal comprenant la paroi externe comprend une paroi de la partie de distribution d'ingrédient (4 ; 104 ; 204 ; 304), et éventuellement la partie du corps principal comprenant la paroi externe comprend la partie d'agitation (3, 103 ; 203 ; 303).

7. Distributeur d'ingrédient (1 ; 101 ; 201 ; 301) selon la revendication 6, dans lequel la partie du corps principal (2 ; 102 ; 202 ; 302) comprenant la paroi externe comprend sensiblement la totalité du corps principal.

8. Distributeur d'ingrédient (1 ; 101 ; 201 ; 301) selon la revendication 6 ou 7, dans lequel la partie de la paroi externe comprend une seule feuille (25 ; 125 ; 225 ; 325) de matériau hydrosoluble ou se désintégrant dans l'eau, éventuellement la seule feuille est une seule feuille de matériau laminé hydrosoluble ou se désintégrant dans l'eau.

9. Distributeur d'ingrédient (1 ; 101 ; 201 ; 301) selon l'une quelconque des revendications 6 à 8, dans lequel le nombre de couches du matériau hydrosoluble ou se désintégrant dans l'eau de la partie de la paroi externe varie sur la longueur de la paroi externe.

10. Distributeur d'ingrédient (1 ; 101 ; 201 ; 301) selon l'une quelconque des revendications 6 à 9, dans lequel des parties adjacentes du matériau sont collées ensemble par adhésif, éventuellement dans lequel l'adhésif est soluble dans l'eau.

11. Distributeur d'ingrédient (1 ; 101 ; 201 ; 301) selon l'une quelconque des revendications 6 à 10, lorsqu'elle dépend de la revendication 5, dans lequel la chambre interne (6 ; 106 ; 206 ; 306) est formée par le pliage ensemble d'une partie du matériau, éventuellement dans lequel les parties pliées sont pressées à la vapeur.

12. Distributeur d'ingrédient (1 ; 101 ; 201 ; 301) selon l'une quelconque des revendications 8 à 11, lorsqu'elle dépend de la revendication 5, dans lequel la seule feuille (25 ; 125 ; 225 ; 325) de matériau laminé comprend la partie de distribution d'ingrédient (4 ; 104 ; 204 ; 304), et éventuellement dans lequel la seule feuille de matériau laminé comprend la partie d'agitation (3 ; 103 ; 203 ; 303).

13. Distributeur d'ingrédient (1 ; 101 ; 201 ; 301) selon l'une quelconque des revendications 8 à 12, dans lequel la seule feuille (25 ; 125 ; 225 ; 325) de matériau laminé comprend pratiquement la totalité du corps principal (2 ; 102 ; 202 ; 302).

14. Distributeur d'ingrédient (1 ; 101 ; 201 ; 301) selon l'une quelconque des revendications 6 à 13, dans lequel la partie de la paroi externe comprend de la cire d'abeille, la partie de la paroi externe qui comprend de la cire d'abeille comprenant éventuellement la partie d'agitation (3 ; 103 ; 203 ; 303), et éventuellement la cire d'abeille étant une couche de cire appliquée à la surface externe de la partie de la paroi externe.

15. Distributeur d'ingrédient (1 ; 101 ; 201 ; 301) selon l'une quelconque des revendications 6 à 14, dans lequel la paroi de la partie de distribution d'ingrédient (4 ; 104 ; 204 ; 304) comprend une seule couche du matériau hydrosoluble ou se désintégrant à l'eau et dans lequel une paroi externe de la partie d'agitation (3 ; 103 ; 203 ; 303) comprend au moins deux couches du matériau hydrosoluble ou se désintégrant dans l'eau.
